# EUROPEAN PATENT APPLICATION

(11) **EP 4 282 574 A1**
(43) Date of publication of application: **29.11.2023**
(21) Application number: 21921040.8
(22) Date of filing: 22.01.2021
(51) Int. Cl.: B23K 26/342, B29C 64/241, B29C 64/245, B29C 64/393, B22F 3/105

(54) **FORMATIVE SYSTEM**

(71) Applicant: NIKON CORPORATION, Minato-ku Tokyo 108-6290 (JP)
(72) Inventor: UENO, Kazuki, Tokyo 108-6290 (JP); ISHIKAWA, Motofusa, Tokyo 108-6290 (JP); YASUBA, Koichi, Tokyo 108-6290 (JP); SEKIGUCHI, Kei, Tokyo 108-6290 (JP); MASUDA, Atsuko, Tokyo 108-6290 (JP); SHIKI, Fumika, Tokyo 108-6290 (JP)
(74) Representative: Hoffmann Eitle
(86) International application number: PCT/JP2021/002258
(87) International publication number: WO 2022/157931

(57) **Abstract**

A build system includes: a build apparatus including an energy beam irradiation unit for emitting an energy beam and a material supply unit for supplying a build material to a part that is irradiated with the energy beam; and a control apparatus that is configured to control the build apparatus to build a build object. The build system builds a second object above a first object including a first space. The second object includes: a first inclination part that is connected to the first object; a second inclination part that is connected to the first object; and a connection part that connects a tip of the first inclination part and a tip of the second inclination part. The build system builds the first inclination part and the second inclination part are built by alternately performing a building of a part of the first inclination part and a building of a part of the second inclination part. A second space below the first inclination part and the second inclination part is connected to the first space, and an upper part of the second space is closed by the connection part.

## Description

### Technical Field

The present invention relates to a build system that is configured to build a build object, for example.

### Background Art

A Patent Literature 1 discloses one example of a build system that is configured to build a build object. The technical problem of the build system is to properly form a structural object by using the built build object.

### Citation List

### Patent Literature

Patent Literature 1: US2014/0197576A1

### Summary of Invention

A first aspect provides a build system including: a build apparatus that includes: an energy beam irradiation unit that emits an energy beam; and a material supply unit that supplies a build material to a part that is irradiated with the energy beam; and a control apparatus that controls the build apparatus to build a build object, wherein a second object is built above a first object including a first space, the second object includes: a first inclination part that is connected to the first object; a second inclination part that is connected to the first object; and a connection part that connects an end of the first inclination part and an end of the second inclination part, the first inclination part and the second inclination part are built by performing a building of a part of the first inclination part and a building of a part of the second inclination part alternately, a second space below the first inclination part and the second inclination part is connected to the first space, an upper part of the second space is closed by the connection part.

A second aspect provides a build method for building a build object by a build apparatus that includes: an energy beam irradiation unit that emits an energy beam; and a material supply unit that supplies a build material to a part that is irradiated with the energy beam, wherein the build method includes: alternately performing a building of a part of a first inclination part that is connected to a first object and a building of a part of a second inclination part that is connected to the first object, to build a second object above the first object including a first space; and building a connection part that connects an end of the first inclination part and an end of the second inclination part, a second space below the first inclination part and the second inclination part is connected to the first space, an upper part of the second space is closed by the connection part.

A third aspect provides a build system including: an object placing apparatus on which a first object is placed; a build apparatus that includes: an energy beam irradiation unit that emits an energy beam; and a material supply unit that supplies a build material to a part that is irradiated with the energy beam, and that performs a building on the first object; a position change apparatus that changes a relative positional relationship between the build apparatus and the object placing apparatus; and a control apparatus that controls the build apparatus and the object placing apparatus, wherein the position change apparatus includes a driving apparatus that moves the object placing apparatus around a rotational axis, a first build operation that is performed by using the build apparatus in a first state in which the object placing apparatus is moved from a reference position toward a first direction around the rotational axis and a second build operation that is performed by using the build apparatus in a second state in which the object placing apparatus is moved from the reference position toward a second direction, which is opposite to the first direction, around the rotational axis are performed alternately to build, on the first object, a second object that includes a first inclination part built by the first build operation and a second inclination part built by the second build operation.

A fourth aspect provides a build system including: an object placing apparatus on which a first object is placed; a build apparatus that includes: an energy beam irradiation unit that emits an energy beam; and a material supply unit that supplies a build material to a part that is irradiated with the energy beam, and that performs a building on the first object; a position change apparatus that changes a relative positional relationship between the build apparatus and the object placing apparatus; and a control apparatus that controls the build apparatus and the object placing apparatus, wherein a second object that connects a first area of the first object and a second area of the first object is built, in order to build the second object: a first build object that is a part of the second object is built on the first area by irradiating the first area with the energy beam after the position change apparatus changes the positional relationship so that the positional relationship is a first relationship; and a second build object that is a part of the second object and that connect the first build object and the second area is built on the first build object by irradiating the first build object with the energy beam after the position change apparatus changes the positional relationship so that the positional relationship is a second relationship that is different from the first relationship.

An operation and another advantage of the present invention will be apparent from an example embodiment described below.

### Brief Description of Drawings

[FIG. 1] FIG. 1 is a block diagram that illustrates a system configuration of a build system in a present example embodiment.
[FIG. 2] FIG. 2 is a cross-sectional view that illustrates a configuration of the build system in the present example embodiment.
[FIG. 3] FIG. 3 is a cross-sectional view that illustrates a configuration of the build system in the present example embodiment.
[FIG. 4] Each of FIG. 4A to FIG 4E is a cross-sectional view that illustrates an aspect in which a certain area on a workpiece is irradiated with a build light and build materials are supplied thereto.
[FIG. 5] Each of FIG. 5A to FIG. 5C is a cross-sectional view that illustrates a process for forming a 3D structural object.
[FIG. 6] FIG. 6 is a perspective view that illustrates an external appearance of a 3D (three-dimensional) structural object including a second object built above a first object.
[FIG. 7] FIG. 7 is a top view that illustrates a upper surface of the 3D structural object including the second object built above the first object.
[FIG. 8] FIG. 8 is a cross-sectional view (especially, a A-A' cross-sectional view in FIG. 7) that illustrates a cross-section of the 3D structural object including the second object built above the first obj ect.
[FIG. 9] FIG. 9 is a cross-sectional view (especially, a B-B' cross-sectional view in FIG. 7) that illustrates a cross-section of the 3D structural object including the second object built above the first obj ect.
[FIG. 10] Each of FIG. 10A and FIG. 10B is a cross-sectional view that illustrates a process for building the 3D structural object illustrated in FIG. 6 to FIG. 9.
[FIG. 11] FIG. 11 is a cross-sectional view that illustrates an inclination member to be built on a side wall member.
[FIG. 12] FIG. 12 is a cross-sectional view in which the inclination member built on the side wall member is enlarged.
[FIG. 13] Each of FIG. 13A and FIG. 13B is a cross-sectional view that illustrates one example of a state of a stage for building the inclination member.
[FIG. 14] FIG. 14 is a cross-sectional view that illustrates the build light with which a side wall member is irradiated for building another inclination member after whole of one inclination member is built.
[FIG. 15] Each of FIG. 15A and FIG. 15B is a cross-sectional view that illustrates the process for building the 3D structural object illustrated in FIG. 6 to FIG. 9.
[FIG. 16] Each of FIG. 16A and FIG. 16B is a cross-sectional view that illustrates the process for building the 3D structural object illustrated in FIG. 6 to FIG. 9.
[FIG. 17] Each of FIG. 17A and FIG. 17B is a cross-sectional view that illustrates the process for building the 3D structural object illustrated in FIG. 6 to FIG. 9.
[FIG. 18] FIG. 18 is a cross-sectional view that illustrates the process for building the 3D structural object illustrated in FIG. 6 to FIG. 9.
[FIG. 19] Each of FIG. 19A and FIG. 19B is a cross-sectional view that illustrates the process for building the 3D structural object illustrated in FIG. 6 to FIG. 9.
[FIG. 20] Each of FIG. 20A and FIG. 20B is a cross-sectional view that illustrates the process for building the 3D structural object illustrated in FIG. 6 to FIG. 9.
[FIG. 21] FIG. 21 is a cross-sectional view that illustrates the process for building the 3D structural object illustrated in FIG. 6 to FIG. 9.
[FIG. 22] FIG. 22 is a cross-sectional view that illustrates the process for building the 3D structural object illustrated in FIG. 6 to FIG. 9.
[FIG. 23] Each of FIG. 23A and FIG. 23B is a cross-sectional view that illustrates the process for building the 3D structural object illustrated in FIG. 6 to FIG. 9.
[FIG. 24] Each of FIG. 24A and FIG. 24B is a cross-sectional view that illustrates the process for building the 3D structural object illustrated in FIG. 6 to FIG. 9.
[FIG. 25] Each of FIG. 25A and FIG. 25B is a cross-sectional view that illustrates the process for building the 3D structural object illustrated in FIG. 6 to FIG. 9.
[FIG. 26] Each of FIG. 26A and FIG. 26B is a cross-sectional view that illustrates the process for building the 3D structural object illustrated in FIG. 6 to FIG. 9.
[FIG. 27] FIG. 27 is a cross-sectional view that illustrates the process for building the 3D structural object illustrated in FIG. 6 to FIG. 9.
[FIG. 28] FIG. 28 is a cross-sectional view that illustrates the process for building the 3D structural object illustrated in FIG. 6 to FIG. 9.
[FIG. 29] Each of FIG. 29A and FIG. 29B is a cross-sectional view that illustrates the process for building the 3D structural object illustrated in FIG. 6 to FIG. 9.
[FIG. 30] Each of FIG. 30A and FIG. 30B is a cross-sectional view that illustrates the process for building the 3D structural object illustrated in FIG. 6 to FIG. 9.
[FIG. 31] FIG. 31 schematically illustrates a moving direction of a target irradiation area EA by a scan operation.
[FIG. 32] FIG. 32 is a cross-sectional view that illustrates a cross-section of the 3D structural object, which includes an outer wall member, at a position at which a support member is not built.
[FIG. 33] FIG. 33 is a cross-sectional view that illustrates a cross-section of the 3D structural object, which includes the outer wall member, at a position at which the support member is built.
[FIG. 34] FIG. 34 is a cross-sectional view that illustrates the 3D structural object including a roof member in which a through-hole is formed.
[FIG. 35] FIG. 35 is a cross-sectional view that illustrates the 3D structural object including the outer wall member in which a through-hole is formed.
[FIG. 36] FIG. 35 is a cross-sectional view that illustrates a process for building the outer wall member in which the through-hole is formed.
[FIG. 37] FIG. 37A and FIG. 37C is a cross-sectional view that illustrates one example of a shape of a cross-section of the through-hole formed in the roof member, and FIG. 37B is a cross-sectional view that illustrates one example of a shape of a cross-section of the through-hole formed in the outer wall member.
[FIG. 38] FIG. 38A and FIG. 38B is a cross-sectional view that illustrates a base member.
[FIG. 39] FIG. 39 is a cross-sectional view that illustrates a process for building the 3D structural object in a fifth modified example.
[FIG. 40] FIG. 40 is a cross-sectional view that illustrates the process for building the 3D structural object in the fifth modified example.
[FIG. 41] FIG. 41 is a cross-sectional view that illustrates the process for building the 3D structural object in the fifth modified example.
[FIG. 42] FIG. 42 is a cross-sectional view that illustrates the process for building the 3D structural object in the fifth modified example.
[FIG. 43] FIG. 43 is a cross-sectional view that illustrates a pipe.
[FIG. 44] FIG. 44 is a cross-sectional view that illustrates a bending duct.
[FIG. 45] FIG. 45 is a cross-sectional view that illustrates a process for building a partial duct.
[FIG. 46] FIG. 46 is a cross-sectional view that illustrates the process for building the partial duct.
[FIG. 47] FIG. 47 is a cross-sectional view that illustrates the process for building the partial duct.
[FIG. 48] FIG. 48 is a cross-sectional view that illustrates the process for building the partial duct.

### Description of Example Embodiments

Next, with reference to drawings, an example embodiment of a build system will be described. In the below-described description, the example embodiment of the build system will be described by using a build system SYS that is configured to build a build object on a workpiece W by performing an additive manufacturing on the workpiece W that is one example of an object. Especially, in the below-described description, the example embodiment of the build system will be described by using the build system SYS that is configured to perform the additive manufacturing based on a Laser Metal Deposition (LMD). The additive manufacturing based on the Laser Metal Deposition is an additive manufacturing that melts a build material M supplied to the workpiece W by build light EL (namely, an energy in a form of light) to build the build object that is integrated with or separatable from the workpiece W.

Note that the Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming.

Moreover, in the below-described description, a positional relationship of various components included in the build system SYS will be described by using an XYZ rectangular coordinate system that is defined by a X-axis, a Y-axis and a Z-axis that are perpendicular to one another. Note that each of an X-axis direction and a Y-axis direction is assumed to be a horizontal direction (namely, a predetermined direction in a horizontal plane) and a Z-axis direction is assumed to be a vertical direction (namely, a direction that is perpendicular to the horizontal plane, and substantially a vertical direction) in the below-described description, for convenience of the description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. Moreover, an XY plane may be a horizontal direction.

### (1) Configuration of Build System SYS

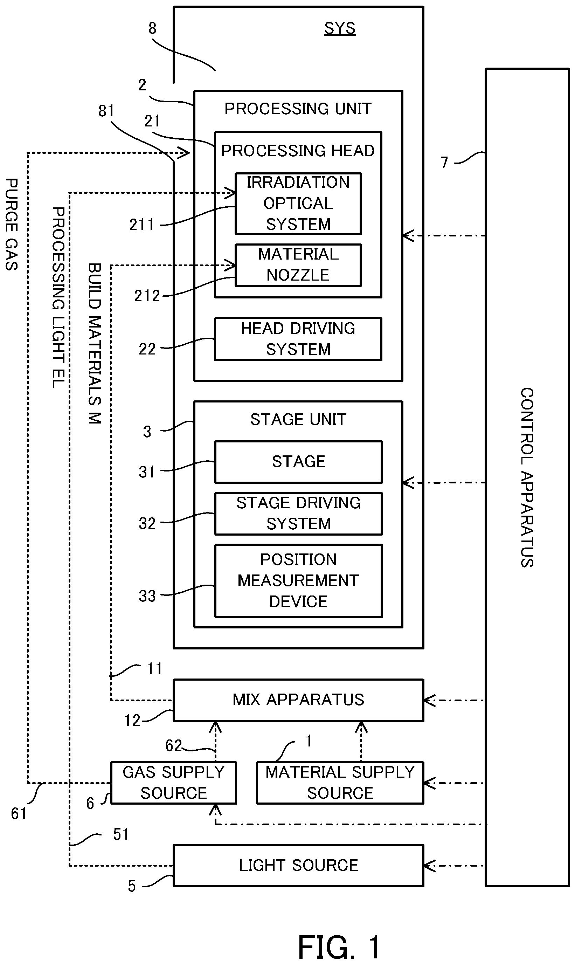

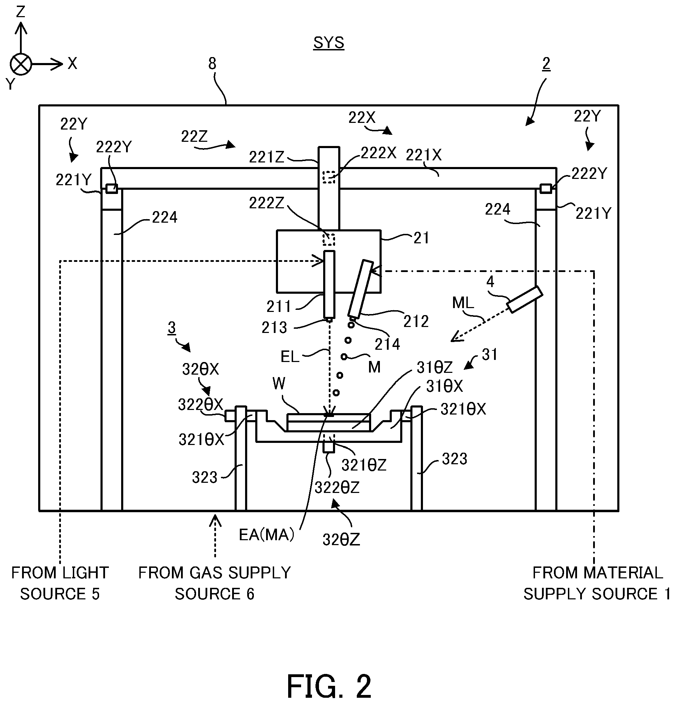

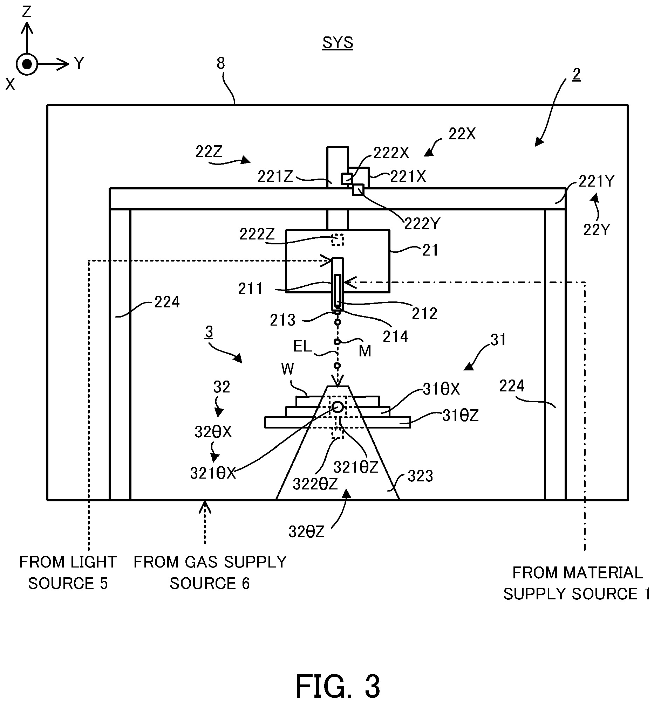

Firstly, with reference to FIG. 1 to FIG. 3, a configuration of the build system SYS in the present example embodiment will be described. FIG. 1 is a system configuration diagram that illustrates a system configuration of the build system SYS in the present example embodiment. Each of FIG. 2 and FIG. 3 is a cross-sectional view that conceptionally illustrates the configuration of the build system SYS in the present example embodiment.

The build system SYS is configured to build (in other words, form) the build object. Note that the build object in the present example embodiment may mean any object that is built by the build system SYS. For example, the build system SYS is configured to build a 3D (three-dimensional) structural object ST (namely, a 3D object having a size in each of 3D directions, a solid object, in other words, an object having a size in the X-axis direction, the Y-axis direction and the Z-axis direction). The build system SYS is configured to build the 3D structural object ST on a workpiece W that is a base (namely, a base member) for building the 3D structural object ST. namely, the build system SYS performs a building on the workpiece W. The build system SYS is configured to build the 3D structural object ST by performing the additive manufacturing on the workpiece W. In a case where the workpiece W is a below-described stage 31, the build system SYS is configured to build the 3D structural object ST on the stage 31. In a case where the workpiece W is a placed object that is an object placed on the stage 31, the build system SYS is configured to build the 3D structural object ST on the placed object. In this case, the build system SYS may build the 3D structural object ST that is integrated with the placed object. An operation for building the 3D structural object ST that is integrated with the placed object is equivalent to an operation for adding a new structural object to the placed object. Note that the existing structural object may be an item that needs to be repaired having a missing part, for example. Alternatively, the build system SYS may build the 3D structural object ST that is separable from the placed object. The placed object that is placed on the stage 31 may be another 3D structural object ST (namely, an existing structural object) that is built by the build system SYS. Note that FIG. 1 illustrates an example in which the workpiece W is the existing structural object held by the stage 31. Moreover, in the below-described description, the example in which the workpiece W is the existing structural object held by the stage 31 will be described.

As described above, the build system SYS is configured to build the 3D structural object ST by the Laser Metal Deposition. Namely, it can be said that the build system SYS is a 3D printer that builds an object by using an Additive layer manufacturing technique. Note that the Additive layer manufacturing technique may be referred to as a Rapid Prototyping, a Rapid Manufacturing or an Additive Manufacturing.

The build system SYS builds the 3D structural object ST by processing build materials M by build light EL. The build material M is a material that is molten by an irradiation with the build light EL having a predetermined intensity or more intensity. At least one of a metal material and a resin material is usable as the build material M, for example. However, another material that is different from the metal material and the resin material may be used as the build material M. The build materials M are powder-like or grain-like materials. Namely, the build materials M are powdery and granular materials. However, the build materials M may not be the powdery and granular materials. For example, wired-like build materials or gas-like build materials may be used as the build materials M.

In order to form the 3D structural object ST, the build system SYS includes a material supply source 1, a build unit 2, a stage unit 3, a light source 5, a gas supply source 6 and a control apparatus 7, as illustrated in FIG. 1 to FIG. 3. The build unit 2 and the stage unit 3 may be contained in an inner space of a housing 8.

The material supply source 1 is configured to supply the build materials M to the build unit 2. The material supply source 1 supplies, to the build unit 2, the build materials M the amount of which is necessary for building the 3D structural object ST per unit time by supplying the build materials M the amount of which is based on the necessary amount.

The build unit 2 is configured to build the 3D structural object ST by processing the build materials M supplied from the material supply source 1. In order to build the 3D structural object ST, the build unit 2 includes a build head 21 and a head driving system 22. Moreover, the build head 21 includes an irradiation optical system 211 and a material nozzle 212 (namely, a supply system that is configured to supply the build materials M). Note that the build head 21 may be referred to as a build apparatus.

The irradiation optical system 211 is an optical system (for example, a condensing optical system) for emitting the build light EL from an emitting part 213. Specifically, the irradiation optical system 211 is optically connected to the light source 5 that generates the build light EL through a light transmitting member 51 such as an optical fiber and light pipe. The irradiation optical system 211 emits the build light EL transmitted from the light source 5 through the light transmitting member 51. The irradiation optical system 211 emits the build light EL in a downward direction (namely, toward a -Z side) from the irradiation optical system 211. The stage 31 is disposed below the irradiation optical system 211. In a case where the workpiece W is placed on the stage 31, the irradiation optical system 211 emits the build light EL toward the workpiece W. Thus, the irradiation optical system 211 may be referred to as an energy beam irradiation unit. Specifically, the irradiation optical system 211 is configured to irradiate a target irradiation area EA, which is set on the workpiece W or near the workpiece W as an area that is irradiated with the build light EL (typically, in which the light is condensed), with the build light EL. Moreover, a state of the irradiation optical system 211 is switchable between a state where the target irradiation area EA is irradiated with the build light EL and a state where the target irradiation area EA is not irradiated with the build light EL under the control of the control apparatus 7. Note that a direction of the build light EL emitted from the irradiation optical system 211 is not limited to a direct downward direction (namely, coincident with the -Z-axis direction), and may be a direction that is inclined with respect to the Z-axis by a predetermined angle, for example.

A supply outlet 214 is formed at the material nozzle 212. The material nozzle 212 is configured to supply (specifically, inject, jet, blow out or spray) the build materials M from the supply outlet 214. Thus, the material nozzle 212 may be referred to as a material supply unit. The material nozzle 212 is physically connected to the material supply source 1, which is a supply source of the build materials M, through a supply pipe 11 and a mix apparatus 12. The material nozzle 212 supplies the build materials M supplied from the material supply source 1 through the supply pipe 11 and the mix apparatus 12. The material nozzle 212 may pressure-feed the build materials M supplied from the material supply source 1 through the supply pipe 11. Namely, the build materials M from the material supply source 1 and a gas for feeding (namely, a pressure-feed gas, and an inert gas such as a Nitrogen or an Argon, for example) may be mixed by the mix apparatus 12 and then pressure-fed to the material nozzle 212 through the supply pipe 11. As a result, the material nozzle 212 supplies the build materials M together with the gas for feeding. A purge gas supplied from the gas supply source 6 is used as the gas for feeding, for example. However, a gas supplied from a gas supply apparatus that is different from the gas supply source 6 may be used as the gas for feeding. Note that the material nozzle 212 is illustrated to have a tube-like shape in FIG. 1, however, a shape of the material nozzle 212 is not limited to this shape. The material nozzle 212 supplies the build materials M in a downward direction (namely, toward the -Z side) from the material nozzle 212. The stage 31 is disposed below the material nozzle 212. In a case where the workpiece W is placed on the stage 31, the material nozzle 212 supplies the build materials M toward the workpiece W or a vicinity of the workpiece W. Note that a supply direction of the build materials M supplied from the material nozzle 212 is a direction that is inclined with respect to the Z-axis by a predetermined angle (as one example, an acute angle), however, it may be the -Z-axis direction (namely, a direct downward direction).

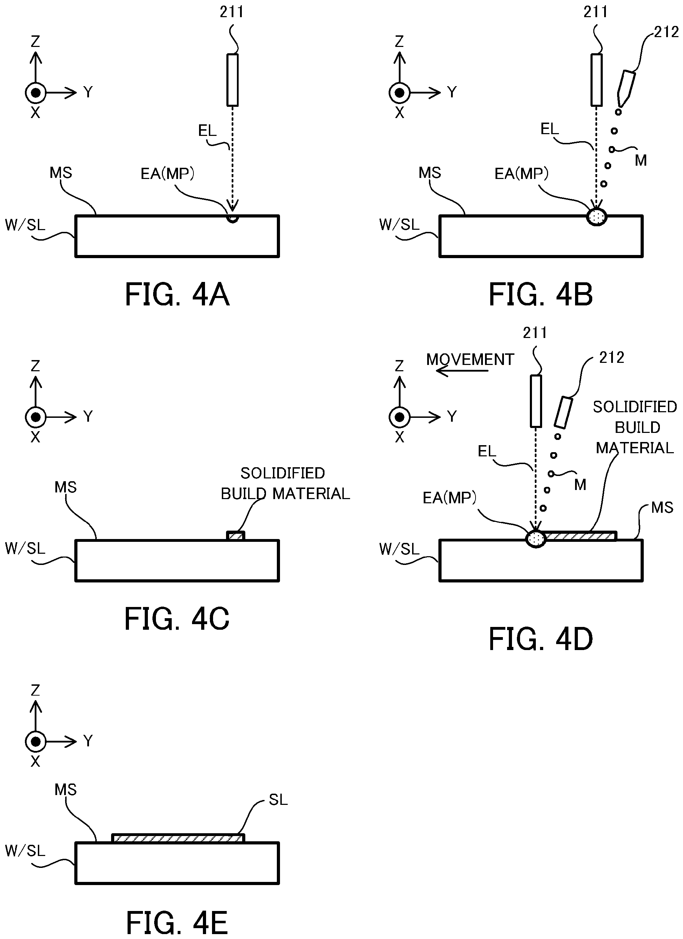

In the present example embodiment, the material nozzle 212 supplies the build materials M to a part that is irradiated with the build light EL from the irradiation optical system 211. Namely, the material nozzle 212 supplies the build materials M to the target irradiation area EA that is irradiated with the build light EL by the irradiation optical system 211. Thus, the material nozzle 212 is aligned with the irradiation optical system 211 so that the target irradiation area EA is coincident with (alternatively, at least partially overlaps with) a target supply area MA that is set on the workpiece W or near the workpiece W as an area to which the material nozzle 212 supplies the build materials M. Note that the material nozzle 212 may be aligned with the irradiation optical system 211 so that the material nozzle 212 supplies the build materials M to a melt pool MP (see FIG. 4 described below) that is formed by the build light EL emitted from the irradiation optical system 211. However, the material nozzle 212 may not supply the materials to the melt pool MP. For example, the build system SYS may melt the build materials M by the irradiation optical system 211 before the build materials M from the material nozzle 212 reaches the workpiece W, and may make the molten build materials M adhere to the workpiece W.

The head driving system 22 is configured to move the build head 21. The head driving system 22 moves the build head 21 along at least one of the X-axis, the Y-axis, the Z-axis, the θX direction, the θY direction and the θZ direction, for example. In an example illustrated in FIG. 2 to FIG. 3, the head driving system 22 moves the build head 21 along each of the X-axis, the Y-axis and the Z-axis. In this case, the head driving system 22 may include a head driving system 22X, a head driving system 22Y and a head driving system 22Z. The head driving system 22X is configured to move the build head 21 along the X-axis. The head driving system 22Y is configured to move the build head 21 along the Y-axis. The head driving system 22Z is configured to move the build head 21 along the Z-axis

The head driving system 22Y includes: a Y guide member 221Y that is connected to a support frame 224, which is disposed on a bottom surface of the housing 8 (alternatively, a surface plate disposed on the bottom surface of the housing 8) through a vibration isolator such as an air spring, and that extends along the Y-axis; a Y slide member 222Y that is movable along the Y guide member 221Y; and a non-illustrated motor that moves the Y slide member 222Y The head driving system 22X includes: a X guide member 221X that is connected to the Y slide member 222Y and that extends along the X-axis; a X slide member 222X that is movable along the X guide member 221X; and a non-illustrated motor that moves the X slide member 222X. The head driving system 22Z includes: a Z guide member 221Z that is connected to the X slide member 222X and that extends along the Z-axis; a Z slide member 222Z that is movable along the Z guide member 221Z; and a non-illustrated motor that moves the Z slide member 222Z. The build head 21 is connected to the Z slide member 222Z. When the Y slide member 222Y moves along the Y guide member 221Y, the build head 21 that is connected to the Y slide member 222Y through the head driving systems 22X and 22Z moves along the Y-axis. When the X slide member 222X moves along the X guide member 221X, the build head 21 that is connected to the X slide member 222X through the head driving system 22Z moves along the X-axis. When the Z slide member 222Z moves along the Z guide member 221Z, the build head 21 that is connected to the Z slide member 222Z moves along the Z-axis.

When the head driving system 22 moves the build head 21, a relative position between the build head 21 and each of the stage 31 and the workpiece W placed on the stage 31 changes. Thus, the head driving system 22 may serve as a position change apparatus that is configured to change a relative positional relationship between the build head 21 and each of the stage 31 and the workpiece W. Furthermore, when the relative position between the build head 21 and each of the stage 31 and the workpiece W changes, the target irradiation area EA and the target supply area MA (furthermore, the melt pool MP) relatively moves relative to the workpiece W.

The stage unit 3 includes the stage 31 and a stage driving system 32.

The workpiece W, which is an object, is placed on the stage 31. Specifically, the workpiece W is placed on a placement surface 311, which is at least a part of an upper surface of the stage 31. In a case where the 3D structural object ST is built on the workpiece W, the 3D structural object ST is placed on the stage 31 through the workpiece W. Thus, the stage 31 may be referred to as an object placing apparatus. The stage 31 is configured to support the workpiece W placed on the stage 31. When the 3D structural object ST is built on the workpiece W, the stage 31 is configured to support the 3D structural object ST through the workpiece W. Thus, the stage 31 may be referred to as a support apparatus. The stage 31 may be configured to hold the workpiece W placed on stage 31. In this case, the stage 31 may include at least one of a mechanical chuck, an electrostatic chuck and a vacuum suction chuck to hold the workpiece W. Alternatively, the stage 31 may not be configured to hold the workpiece W placed on the stage 31. In this case, the workpiece W may be placed on the stage 31 without clamping. The irradiation optical system 211 described above emits the build light EL in at least a part of a period during which the workpiece W is placed on the stage 31. Further, the material nozzle 212 described above supplies build materials M in at least a part of the period during which the workpiece W is placed on the stage 31.

In the present example embodiment, the stage 31 includes a stage 31θX and a stage 31θZ. A reason why the stage 31 includes the stage 31θX and the stage 31θZ is to move the stage 31 along each of the θX direction and the θZ direction by the below-described stage driving system 32, as described later in detail. The workpiece W is placed on the stage 31θZ. Thus, at least a part of an upper surface of the state 31θZ is used as the placement surface 311 on which the workpiece W is placed. The stage 31θX is movable along the θX direction (namely, rotatable around a rotational axis along the X-axis) by the stage driving system 32 described later. The stage 31θZ is disposed in a concave part formed in the stage 31θX so as to rotatable around the rotational axis along the X-axis together with the stage 31θX due to the rotation of the stage 31θX. The stage 31θZ is disposed in the concave part formed in the stage 31θX so as to movable along the θZ direction (namely, rotatable around a rotational axis along the Z-axis) by the stage driving system 32 independently from the rotation of the stage 31θX. Note that a configuration of the stage 31 is not limited to a configuration illustrated in FIG. 2 and FIG. 3. As one example, the stage 31θZ may not be disposed in the concave part built at the stage 31θX.

The stage driving system 32 is configured to move the stage 31. The stage driving system 32 moves the stage 31 along at least one of the X-axis, the Y-axis, the Z-axis, the θX direction, the θY direction and the θZ direction, for example. In the example illustrated in FIG. 2 and FIG. 3, the stage driving system 32 moves the stage 31 along each of the θX direction and the θZ direction. Namely, the stage driving system 32 rotates the stage 31 around the rotational axis along the X-axis and rotates the stage 31 around the rotational axis along the Z-axis. In this case, the stage driving system 32 may include a stage driving system 32θX and a stage driving system 32θZ. The stage driving system 32θX is configured to rotate the stage 31 (especially, the stage 31θX) around the rotational axis along the X-axis. The stage driving system 32θZ is configured to rotate the stage 31 (especially, the stage 31θZ) around the rotational axis along the Z-axis. The stage driving system 32θX includes a pair of rotational shafts 321θX that is rotatably connected to a pair of support frames 323, which is disposed on the bottom surface of the housing 8 (alternatively, the surface plate disposed on the bottom surface of the housing 8) through a vibration isolator such as an air spring, respectively; and a motor 322θX that is a driving apparatus configured to rotate the pair of the rotational shafts 321θX around the rotational axis along the X-axis. The pair of the rotational shafts 321θX extends along the X-axis direction. The pair of the rotational shafts 321θX is connected to the stage 31θX so that the stage 31 is between them along the X-axis direction. The stage driving system 32θZ includes a rotational shaft 321θZ that extends along the Z-axis direction and that is connected to a bottom surface of the stage 31θZ (specifically, a surface facing the stage 31θX); and a motor 322θZ that rotates the rotational shaft 321θZ around the rotational axis along the Z-axis. When the pair of the rotational shafts 321θX rotates, the stage 31θX rotates around a rotational axis along the X-axis. As a result, the stage 31θZ supported by the stage 31θX (furthermore, the workpiece W supported by the stage 31θZ) also rotates around the rotational axis along the X-axis. When the rotational shafts 321θZ rotates, the stage 31θZ (furthermore, the workpiece W supported by the stage 31θZ) also rotates around a rotational axis along the Z-axis. Note that the stage 31 illustrated in FIG. 2 and FIG. 3 has a double-sided structure in which the stage 31θX is supported from both sides by support frame 323. However, the stage 31 may have a cantilever structure in which the stage 31θX is supported from one side by the support frame 323.

When the stage driving system 32 moves the stage 31, the relative position between the build head 21 and each of the stage 31 and the workpiece W placed on the stage 31 changes. Thus, the stage driving system 32 may serve as a position change apparatus that is configured to change the relative positional relationship between the build head 21 and each of the stage 31 and the workpiece W. Furthermore, when the relative position between the build head 21 and each of the stage 31 and the workpiece W changes, the target irradiation area EA and the target supply area MA (furthermore, the melt pool MP) relatively moves relative to the workpiece W.

An operation for rotating the stage 31 around the rotational axis may be regarded to be substantially equivalent to an operation for changing an attitude of the stage 31 (for example, changing a relative attitude of the stage 31 relative to the build head 21). Thus, the stage driving system 32 may serve as a position change apparatus for changing the relative positional relationship between the build head 21 and each of the stage 31 and the workpiece W by changing the relative attitude of the stage 31 relative to the build head 21.

The light source 5 is configured to emit at least one of an infrared light, a visible light and an ultraviolet light as the build light EL, for example. However, another type of light may be used as the build light EL. The build light EL may include plurality of pulsed lights (namely, a plurality of pulsed beam). The build light EL may be a laser light. In this case, the light source 5 may include a semiconductor laser such as a laser light source (for example, a Laser Diode (LD)). The laser light source may be a fiber laser, a CO₂ laser, a YAG laser, an Excimer laser and the like. However, the build light EL may not be the laser light. The light source 5 may include any light source (for example, at least one of a LED (Light Emitting Diode), a discharge lamp and the like).

The gas supply source 6 is a supply source of the purge gas for purging the inner space of the housing 8. The purge gas includes inert gas. The Nitrogen gas or Argon gas is one example of the inert gas. The gas supply source 6 supplies the purge gas to the inner space of the housing through supply pipe 61 that connects the gas supply source 6 and the housing 8. As a result, the inner space of the housing 8 is a space that is purged by the purge gas. Note that the gas supply source 6 may be a tank that stores the inert gas such as the Nitrogen gas or the Argon gas. In a case where the purge gas is the Nitrogen gas, the gas supply source 6 may be a Nitrogen gas generation apparatus that generates the Nitrogen gas by using air as material.

In a case where the material nozzle 212 supplies the build materials M together with the purge gas as described above, the gas supply source 6 may supply the purge gas to the mix apparatus 12 to which the build materials M are supplied from the material supply source 1. Specifically, the gas supply source 6 may be connected to the mix apparatus 12 through a supply pipe 62 that connects the gas supply source 6 and the mix apparatus 12. As a result, the gas supply source 6 supplies the purge gas to the mix apparatus 12 through the supply pipe 62. In this case, the build materials M from the material supply source 1 may be supplied (specifically, pressure-fed) to the material nozzle 212 through the supply pipe 11 by the purge gas supplied from the gas supply source 6 through the supply pipe 62. Namely, the gas supply source 6 may be connected to the material nozzle 212 through the supply pipe 62, the mix apparatus 12 and the supply pipe 11. In this case, the material nozzle 212 supplies, from the supply outlet 214, the build materials M together with the purge gas for pressure-feeding the build materials M.

The control apparatus 7 is configured to control an operation of the build system SYS. For example, the control apparatus 7 may control the build unit 2 (for example, at least one of the build head 21 and the head drive system 22) of the build system SYS. For example, the control apparatus 7 may control the stage unit 3 (for example, the stage driving system 32) of the build system SYS. As a result, the control apparatus 7 may build the build object (for example, the 3D structural object ST) by controlling at least one of the build unit 2 and the stage unit 3.

The control apparatus 7 may include an arithmetic apparatus and a storage apparatus, for example. The arithmetic apparatus may include at least one of a CPU (Central Processing Unit) and a GPU (Graphic Processing Unit), for example. The storage apparatus may include a memory, for example. The control apparatus 7 serves as an apparatus for controlling the operation of the build system SYS by means of the arithmetic apparatus executing a computer program. The computer program is a computer program that allows the arithmetic apparatus to execute (namely, to perform) a below described operation that should be executed by the control apparatus 7. Namely, the computer program is a computer program that allows the control apparatus 7 to function so as to make the build system SYS execute the below described operation. The computer program executed by the arithmetic apparatus may be recorded in the storage apparatus (namely, a recording medium) of the control apparatus 7, or may be recorded in any recording medium (for example, a hard disk or a semiconductor memory) that is built in the control apparatus 7 or that is attachable to the control apparatus 7. Alternatively, the arithmetic apparatus may download the computer program that should be executed from an apparatus disposed outside the control apparatus 7 through a network interface.

The control apparatus 7 may control an emitting aspect of the build light EL by the irradiation optical system 211. The emitting aspect may include at least one of an intensity of the build light EL and an emitting timing of the build light EL, for example. In a case where the build light EL includes the plurality of pulse lights, the emitting aspect may include at least one of an ON time of the pulsed light, an emission cycle of the pulsed light and a ratio (what we call a duty ratio) of a length of the ON time of the pulsed light and the emission cycle of the pulsed light, for example. Moreover, the control apparatus 7 may control a moving aspect of the build head 21 by the head driving system 22. The control apparatus 7 may control a moving aspect of the stage 31 by the stage driving system 32. The moving aspect may include at least one of a moving distance, a moving speed, a moving direction and a moving timing (a moving period), for example. Moreover, the control apparatus 7 may control a supply aspect of the build materials M by the material nozzle 212. The supply aspect may include at least one of the supplied amount (especially, the supplied amount per unit time) and a supply timing (a supply period).

The control apparatus 7 may not be disposed in the build system SYS. For example, the control apparatus 7 may be disposed at the outside of the build system SYS as a server or the like. In this case, the control apparatus 7 may be connected to the build system SYS through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (a registered trademark) such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 7 and the build system SYS may be configured to transmit and receive various information through the network. Moreover, the control apparatus 7 may be configured to transmit an information such as a command and a control parameter to the build system SYS through the network. The build system SYS may include a reception apparatus that is configured to receive the information such as the command and the control parameter from the control apparatus 7 through the network. The build system SYS may include a transmission apparatus that is configured to transmit the information such as the command and the control parameter to the control apparatus 7 through the network (namely, an output apparatus that is configured to output an information to the control apparatus 7). Alternatively, a first control apparatus that is configured to perform a part of the arithmetic processing performed by the control apparatus 7 may be disposed in the build system SYS and a second control apparatus that is configured to perform another part of the arithmetic processing performed by the control apparatus 7 may be disposed at an outside of the build system SYS.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 7 may include. Moreover, the recording medium may include a device that is configured to record the computer program (for example, a device for a universal use or a device for an exclusive use in which the computer program is embedded to be executable in a build of at least one of a software, a firmware and the like). Moreover, various arithmetic processing or functions included in the computer program may be realized by a logical processing block that is realized in the control apparatus 7 by means of the control apparatus 7 (namely, a computer) executing the computer program, may be realized by a hardware such as a predetermined gate array (a FPGA, an ASIC) of the control apparatus 7, or may be realized in a build in which the logical process block and a partial hardware module that realizes an partial element of the hardware are combined.

### (2) Operation of Build System SYS

Next, an operation of the build system SYS will be described.

### (2-1) Build Operation

Firstly, a build operation (in the present example embodiment, an additive manufacturing operation) for building the 3D structural object ST will be described. As described above, the build system SYS performs the build operation for building the 3D structural object ST by performing the additive manufacturing on the workpiece W. Specifically, the build system SYS builds the 3D structural object ST by the Laser Metal Deposition. Thus, the build system SYS may build the 3D structural object ST by performing the existing additive manufacturing operation based on the Laser Metal Deposition. Next, one example of the additive manufacturing operation for building the 3D structural object ST by using the Laser Metal Deposition will be briefly described.

The build system SYS builds the 3D structural object ST on the workpiece W based on 3D model data or the like (for example, CAD (Computer Aided Design) data) of the 3D structural object ST that should be built. Measured data of the solid object measured by at least one of a non-illustrated measurement apparatus disposed in the build system SYS and a 3D shape measurement apparatus disposed separately from the build system SYS may be used as the 3D model data. The build system SYS sequentially builds a plurality of layered partial structural objects (it is referred to as a "structural layer" in the below-described description) SL that are arranged along the Z-axis direction in order to build the 3D structural object ST, for example. For example, the build system SYS builds, one by one, the plurality of structural layers SL based on date related to a plurality of layers that are obtained by slicing a model of the 3D structural object ST along the Z-axis direction. As a result, the 3D structural object ST that is a layered structural body in which the plurality of structural layers SL are layered is built. Next, a flow of an operation for building the 3D structural object ST by building the plurality of structural layers SL one by one in sequence will be described.

Firstly, with reference to FIG. 4A to FIG. 4E, an operation for building each structural layer SL will be described. The build system SYS moves at least one of the build head 21 and the stage 31 so that the target irradiation area EA is set at a desired area on a build surface MS that corresponds to a surface of the workpiece W or a surface of the built structural layer SL, under the control of the control apparatus 7. Then, the build system SYS emits the build light EL from the irradiation optical system 211 to the target irradiation area EA. In this case, a condensed plane on which the build light EL is condensed along the Z-axis direction may be located on the build surface MS. Alternatively, the condensed plane may be away from the build surface MS in the Z-axis direction. As a result, as illustrated in FIG. 4A, the melt pool (namely, a pool of a metal molten by the build light EL) MP is formed on the build surface MS that is irradiated with the build light EL. Moreover, the build system SYS supplies the build materials M from the material nozzle 212 under the control of the control apparatus 7. As a result, the build materials M are supplied to the melt pool MP. The build materials M supplied to the melt pool MP are molten by the build light EL with which the melt pool MP is irradiated. Alternatively, the build materials M supplied from the material nozzle 212 may be molten by the build light before reaching the melt pool MP and the molten build materials M may be supplied to the melt pool MP. Then, when the melt pool MP is not irradiated with the build light EL due to the movement of at least one of the build head 21 and the stage 31, the build materials M molten in the melt pool MP are cooled and solidified (namely, coagulated). As a result, as illustrated in FIG. 4C, the build object including the solidified build materials M is deposited on the build surface MS.

The build system SYS repeats a series of build process including the formation of the melt pool MP by the irradiation with the build light EL, the supply of the build materials M to the melt pool MP, the melting of the supplied build materials M and the solidification of the molten build materials M while moving the build head 21 relative to the build surface MS along at least one of the X-axis direction and the Y-axis direction, as illustrated in FIG. 4D. Typically, the build system SYS repeats a scan operation for moving the build head 21 relative to the build surface MS along either one of the X-axis direction and the Y-axis direction while irradiating the build surface MS with the build light EL at a desired timing, and a step operation for moving the build head 21 along the other one of the X-axis direction and the Y-axis direction without irradiating the build surface MS with the build light EL. In this case, the build system SYS irradiates an area on the build surface MS on which the build object should be built with the build light EL and does not irradiate an area on the build surface MS on which the build object should not be built with the build light EL in a period during which the scan operation is performed. Namely, the build system SYS moves the target irradiation area EA along a predetermined moving trajectory on the build surface MS and irradiates the build surface MS with the build light EL at a timing based on an aspect of a distribution of the area on which the build object should be built. Typically, the build system SYS repeats the scan operation for moving the target irradiation area EA relative to the build surface MS along either one of the X-axis direction and the Y-axis direction while irradiating the target irradiation area EA with the build light EL at a desired timing, and a step operation for moving the target irradiation area EA along the other one of the X-axis direction and the Y-axis direction without irradiating the target irradiation area EA with the build light EL. As a result, the melt pool MP also moves on the build surface MS along a moving trajectory based on the moving trajectory of the target irradiation area EA. Specifically, the melt pool MP is formed in series at a part that is irradiated with the build light EL in the area along the moving trajectory of the target irradiation area EA on the build surface MS. As a result, as illustrated in FIG. 4E, the structural layer SL that is an aggregation of the build object of the build materials M, which are solidified after being molten, is built on the build surface MS. Namely, the structural layer SL that is an aggregation of the build object built on the build surface MS in a pattern based on the moving trajectory of the melt pool MP (namely, the structural layer SL having a shape based on the moving trajectory of the melt pool MP in a planar view) is built. Incidentally, in a case where the target irradiation area EA is set at the area on which the build object should not be built, the build system SYS may irradiate the target irradiation area EA with the build light EL and stop the supply of the build materials M. Moreover, in a case where the target irradiation area EA is set at the area on which the build object should not be built, the build system SYS may supply the build materials M to the target irradiation area EA and irradiate the target irradiation area EA with the build light EL having an intensity by which the melt pool MP is not formed.

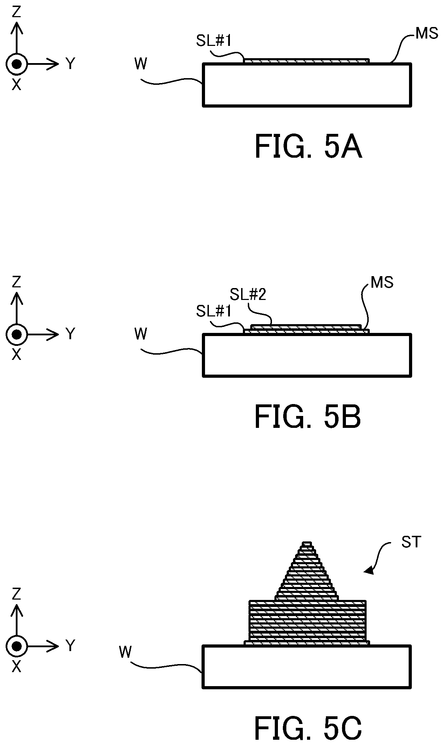

The build system SYS repeats the operation for building the structural layer SL based on the 3D model data under the control of the control apparatus 7. Specifically, the control apparatus 7 firstly generates slice data by performing a slicing process on the 3D model data by a layer pitch. The build system SYS performs an operation for building a first structural layer SL#1 on the build surface MS that corresponds to the surface of the workpiece W based on the slice data corresponding to the structural layer SL#1. As a result, as illustrated in FIG. 5A, the structural layer SL#1 is built on the build surface MS. Then, the build system SYS sets the surface (namely, an upper surface) of the structural layer SL#1 to be a new build surface MS and builds a second structural layer SL#2 on the new build surface MS. In order to build the structural layer SL#2, firstly, the control apparatus 7 controls at least one of the head driving system 22 and the stage driving system 32 so that the build head 21 moves relative to the stage 31 in the Z-axis direction. Specifically, the control apparatus 7 controls at least one of the head driving system 22 and the stage driving system 32 to move the build head 21 toward the +Z side and / or to move the stage 31 toward the -Z side so that the target irradiation area EA is set on the surface of the structural layer SL#1 (namely, the new build surface MS). Then, the build system SYS performs an operation for building the structural layer SL#2 on the structural layer SL#1 based on the slice data corresponding to the structural layer SL#2, as with the operation for building the structural layer SL#1, under the control of the control apparatus 7. As a result, as illustrated in FIG. 5B, the structural layer SL#2 is built. Then, the same operation is repeated until all structural layers SL constituting the 3D structural object ST that should be built on the workpiece W are built. As a result, the 3D structural object ST is built by a layered structural object in which the plurality of structural layers SL are layered, as illustrated in FIG. 5C.

### (2-2) Specific Example of Build Operation

In the present example embodiment, the build system SYS may build a second object above a first obj ect by performing the above-described build operation. Namely, the build system SYS may build the 3D structural object ST including the second object built above the first object. The build system SYS may build the 3D structural object ST including the first object and the second object built above the first object.

In the present example embodiment, when the second object is built above the first object, the build system SYS may build the second object so that a space is formed below the second object and an upper part of the space is closed (for example, blocked). In this case, the build system SYS may build the second object above the first object including a first space (namely, the first object in which the first space is formed) so that a second space is formed below the second object and an upper part of the second space is closed. In this case, the first space and the second space may be connected to each other. Incidentally, in this case, the build system SYS may build the second object on an upper surface of the first object (typically a planar surface or a convex surface) to form the first space below the second object and close an upper part of the first space.

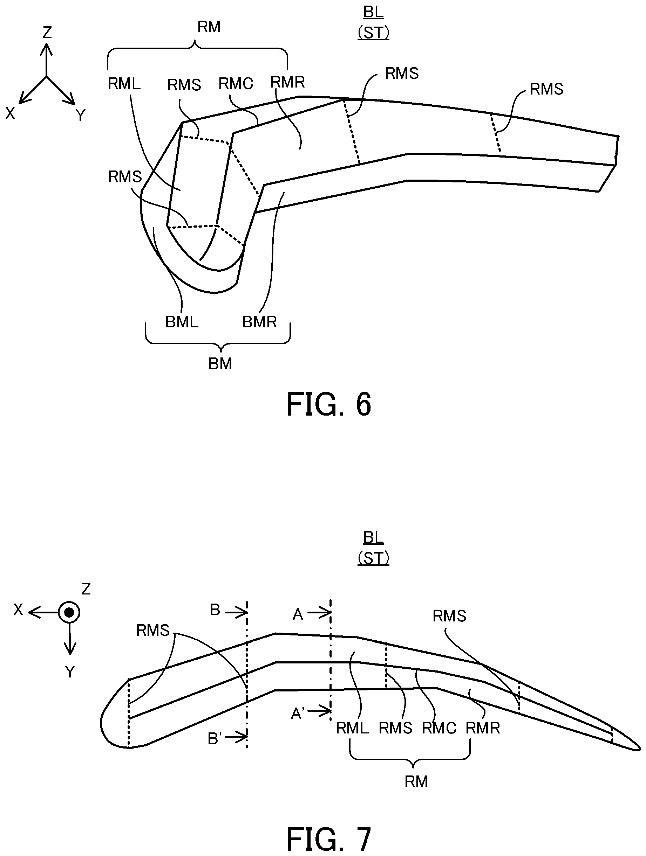

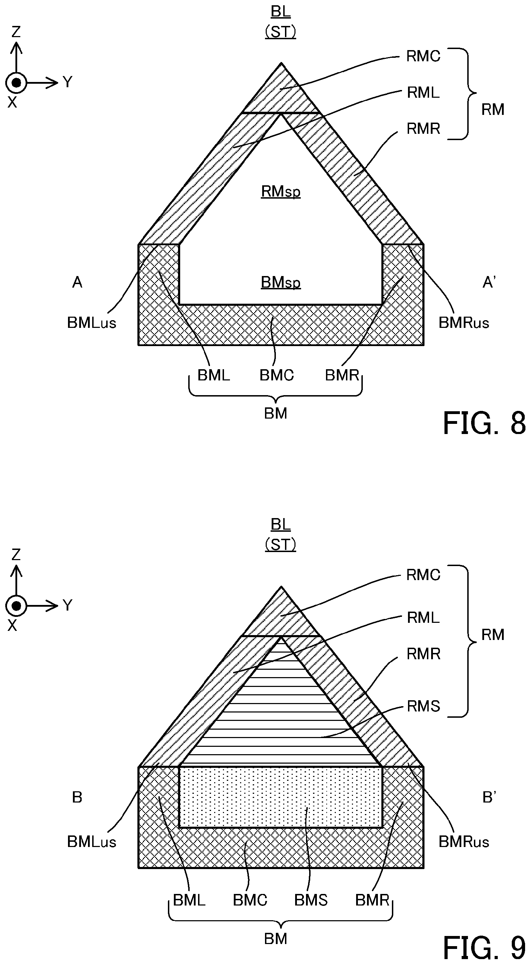

One example of the 3D structural object ST including the second object built above the first object is illustrated in FIG. 6 to FIG. 9. FIG. 6 is a perspective view that illustrates an external appearance of the 3D structural object ST including the second object built above the first object. FIG. 7 is a top view that illustrates a upper surface of the 3D structural object ST including the second object built above the first object. FIG. 8 is a cross-sectional view (especially, a A-A' cross-sectional view in FIG. 7) that illustrates a cross-section of the 3D structural object ST including the second object built above the first object. FIG. 9 is a cross-sectional view (especially, a B-B' cross-sectional view in FIG. 7) that illustrates a cross-section of the 3D structural object ST including the second object built above the first object.

FIG. 6 to FIG. 9 illustrates, as one example of the 3D structural object ST including the second object built above the first object, the 3D structural object ST including a base member BM, which is one example of the first object, and a roof member RM, which is one example of the second object, built above the base member BM. Note that FIG. 6 to FIG. 9 illustrate an example in which the 3D structural object ST is a turbine blade BL that constitutes a blade of a turbine. Namely, FIG. 6 to FIG. 9 illustrate the 3D structural object ST that is usable as the turbine blade BL. In other words, FIG. 6 to FIG. 9 illustrate an examples in which the shape of the 3D structural object ST is a shape corresponding to the turbine blade BL. Note that the turbine blade BL may be a rotor blade or may be a stator blade. However, the 3D structural object ST including the second object built above the first object is not limited to the turbine blade BL. The 3D structural object ST including the second object built above the first object may be an object different from the turbine blade BL (for example, an object used for a usage different from an usage for using it for the turbine).

As illustrated in FIG. 6 to FIG. 9, the 3D structural object ST has a shape extending along a longitudinal direction (the X-axis direction in an example illustrated in FIG. 6 to FIG. 9). Since the 3D structural object ST is the turbine blade BL, the 3D structural object ST may be curved to have a bow-shaped shape in a planar view. In the examples illustrated in FIG. 6 to FIG. 9, the 3D structural object ST is curved in a plane along the XY plane so as to have a bow-shaped shape in the plane along the XY plane. Thus, each of the base member BM and the roof member RM may also have a shape extending along the X-axis direction and may be curved in the plane along the XY plane so as to have a bow-shaped shape in the plane along the XY plane.

The base member BM includes a bottom member BMC, a side wall member BML, and a side wall member BMR.

The bottom member BMC is a long plate-like member extending to have a longitudinal direction (namely, extending along the longitudinal direction), for example. In the examples illustrated in FIG. 6 to FIG. 9, the bottom member BMC has a longitudinal direction along the X-axis direction (for example, has the longitudinal direction along a direction that is approximately parallel to the rotational axis of the stage 31θX described above). However, since the 3D structural object ST is the turbine blade, the bottom member BMC may be curved to have a bow-shaped shape in a planar view. In the examples illustrated in FIG. 6 to FIG. 9, the bottom member BMC may be curved in the plane along the XY plane so as to have a bow-shaped shape in the plane along the XY plane.

The side wall member BML and the side wall member BMR are built on the bottom member BMC. The side wall member BML and the side wall member BMR may be built along an outer rim of the bottom member BMC. In this case, the side wall member BML, the side wall member BMR, and the bottom member BMC may be built as a single member (as a monolithic member). Specifically, the side wall member BML may be built along the outer rim of the bottom member BMC at one side (for example, the outer rim at the -Y side) and the side wall member BMR may be built along the outer rim of the bottom member BMC at one side (for example, the outer rim at the +Y side). Thus, each of the side wall members BML and BMR may be curved to have a bow-shaped shape in a planar view. In the example illustrated in FIG. 6 to FIG. 9, each of the side wall members BML and BMR may be curved in the plane along the XY plane so as to have a bow-shaped shape in the plane along the XY plane.

Each of the side wall members BML and BMR extends upwardly to protrude from the bottom member BMC. The side wall members BML and BMR may be built to be annularly connected in a planar view (in the example illustrated in FIG. 6 to FIG. 9, to be annularly connected in a plane along the XY plane). As a result, the side wall members BML and BMR, together with the bottom member BMC, may form a space BMsp (see FIG. 8) that is one example of the first space. Namely, the side wall members BML and BMR may protrude from the bottom member BMC and may be annularly connected in a planar view so that the space BMsp surrounded by the side wall members BML and BMR and the bottom member BMC (in other words, facing the side wall members BML and BMR and the bottom member BMC) is formed.

The roof member RM includes an inclination member RML and an inclination member RMR.

The inclination member RML is a member connected to the side wall member BML. For example, the inclination member RML is built on the side wall member BML. In this case, the inclination member RML may be built along the side wall member BML. Thus, the inclination member RML may be curved to have a bow-shaped shape in a planar view. In the examples illustrated in FIG. 6 to FIG. 9, the inclination member RML may be curved in the plane along the XY plane so as to have a bow-shaped shape in the plane along the XY plane.

The inclination member RML may be a plate-shaped member extending from the side wall member BML. The inclination member RML may be a member extending from the side wall member BML toward a space above the side wall member BML. Especially, the inclination member RML may be a member extending in a direction that is inclined with respect to the side wall member BML. For example, the inclination member RML may be a member extending in a direction that is inclined with respect to an upper surface BMI,us of the side wall member BML on which the inclination member RML is built. In the example illustrated in FIG. 6 to FIG. 9, the upper surface BMI,us of the side wall member BML is a plane along the XY plane. Thus, the inclination member RML may be a member extending in a direction that is inclined with respect to the XY plane. For example, the inclination member RML may be a member extending in a direction that is inclined with respect to a direction along which the side wall member BML extends (namely, protrudes). In the example illustrated in FIG. 6 to FIG. 9, the side wall member BML is a member extending (namely, protruding) in the Z-axis direction. Thus, the inclination member RML may be a member extending toward a direction that is inclined with respect to the Z-axis.

The inclination member RMR is a member connected to the side wall member BMR. For example, the inclination member RMR is built on the side wall member BMR. In this case, the inclination member RMR may be built along the side wall member BMR. Thus, the inclination member RMR may be curved to have a bow-shaped shape in a planar view. In the examples illustrated in FIG. 6 to FIG. 9, the inclination member RMR may be curved in the plane along the XY plane so as to have a bow-shaped shape in the plane along the XY plane.

The inclination member RMR may be a plate-shaped member extending from the side wall member BMR. The inclination member RMR may be a member extending from the side wall member BMR toward a space above the side wall member BMR. Especially, the inclination member RMR may be a member extending in a direction that is inclined with respect to the side wall member BMR. For example, the inclination member RMR may be a member extending in a direction that is inclined with respect to an upper surface BMRus of the side wall member BMR on which the inclination member RMR is built. In the example illustrated in FIG. 6 to FIG. 9, the upper surface BMRus of the side wall member BMR is a plane along the XY plane. Thus, the inclination member RMR may be a member extending in a direction that is inclined with respect to the XY plane. For example, the inclination member RMR may be a member extending in a direction that is inclined with respect to a direction along which the side wall member BMR extends (namely, protrudes). In the example illustrated in FIG. 6 to FIG. 9, the side wall member BMR is a member extending (namely, protruding) in the Z-axis direction. Thus, the inclination member RMR may be a member extending toward a direction that is inclined with respect to the Z-axis.

A space RMsp (see FIG. 8), which is one example of the second space, may be formed below the inclination member RMR and the inclination member RML. Namely, the inclination member RMR and the inclination member RML may be built above the base member BM so that the space RMsp, which is partially surrounded by the inclination members RMR and RML (in other words, faces the inclination members RMR and RML), is formed below the inclination members RMR and RML. In this case, typically the direction along which the inclination member RMR extends may be different from the direction along which the inclination member RML extends. For example, the direction along which the inclination member RMR extends may intersect with the direction along which the inclination member RML extends.

The space RMsp formed below the inclination members RMR and RML may be connected to the space BMsp formed in the base member BM. Namely, a space including the space BMsp and the space RMsp, which is surrounded by the base member BM and the roof member RM, may be formed in the 3D structural object ST.

An upper part of the space RMsp may be closed (in other words, may be blocked or may be covered). Specifically, the upper part of the space RMsp may be closed by the inclination members RML and RMR of the roof member RM. Note that "a space closed by the roof member RM" here may mean "a space surrounded by the roof member RM".

In a case where the upper part of the space RMsp is closed by the roof member RM, an end of the inclination member RML may be connected to an end of the inclination member RMR. Note that the end of the inclination member RML may mean the other edge part (for example, an upper edge part) of the inclination member RML that is opposite to one edge part (for example, a lower edge part) of the inclination member RML that is connected to the side wall member BML. The end of the inclination member RMR may mean the other edge part (for example, an upper edge part) of the inclination member RMR that is opposite to one edge part (for example, a lower edge part) of the inclination member RMR that is connected to the side wall member BMR. For example, as illustrated in FIG. 6 to FIG. 9, the roof member RM may include a connection member RMC that is connected to the end of the inclination member RML and the end of the inclination member RMR. Namely, the roof member RM may include the connection member RMC that connects the end of the inclination member RML to the end of the inclination member RMR so that the upper part of the space RMsp is closed. In this case, it may be regarded that the upper part of the space RMsp is closed by the connection member RMC. Alternatively, the end of the inclination member RML may be directly connected to the end of the inclination member RMR. Namely, the roof member RM may not necessarily include the connection member RMC.

The roof member RM may further includes a support member RMS. The support member RMS is a member for supporting the inclination parts RML and RMR. The support member RMS is a member for supporting the inclination parts RML and RMR from below, for example. As one example, the support member RMS may be a plate-shaped member extending from below upwardly to support the inclination parts RML and RMR from below.

The support member RMS is built on a support member BMS of the base member BM. The support member BMS is a member that supports the support member RMS. For example, the support member BMS may be a member that supports the support member RMS from below. In this case, the support member RMS may be a member extending upwardly from the support member BMS (namely, from the support member BMS to the inclination parts RML and RMR located above the support member BMS). The support member RMS may be a member a lower part of which is connected to the support member BMS and an upper part of which is connected to the inclination members RML and RMR.

The roof member RM may include a plurality of support members RMS at a plurality of discrete positions along the longitudinal direction of the roof member RM (namely, the longitudinal direction along which the roof member RM extends), respectively. In this case, the base member BM may include a plurality of support members BMS at a plurality of discrete positions along the longitudinal direction of the base member BM (namely, the longitudinal direction along which the base member BM extends). Incidentally, FIG. 8 illustrates a cross-section of the 3D structural object ST at a position where the support members BMS and RMS are not built, and FIG. 9 illustrates a cross-section of the 3D structural object ST at a position where the support members BMS and RMS are built. Incidentally, the roof member RM includes four support members RMS in the example illustrated in FIG. 6 to FIG. 7, however, the number of support members RMS is not limited to four.

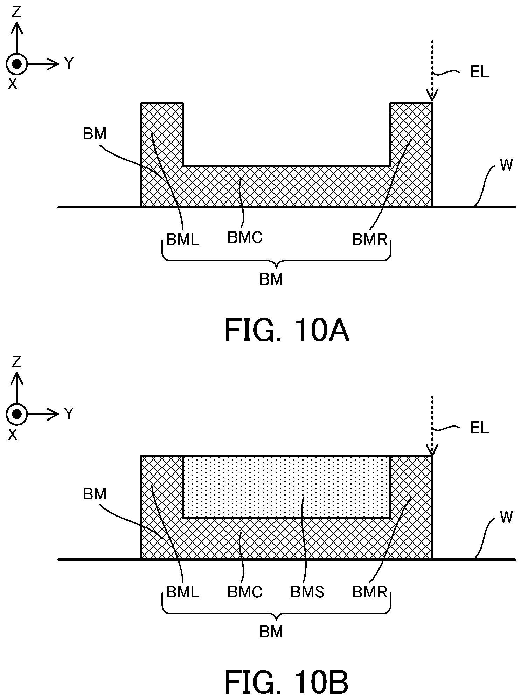

Next, with reference to FIG. 10 to FIG. 30, an operation for building the 3D structural object ST including the second object built above the first object will be further described. Incidentally, in the below-described description, the operation for building the 3D structures ST illustrated in FIG. 6 to FIG. 9 will be described for convenience of description. However, any 3D structural object ST including the second object built above the first object may be built by the operation described below.

Firstly, as illustrated in FIG. 10A and FIG. 10B, the build system SYS performs the build operation described above to build the base member BM on the workpiece W. Specifically, the build system SYS builds a plurality of structural layers SL in sequence to build the base member BM, which is constituted from the plurality of structural layers SL, on the workpiece W. Typically, the build system SYS builds the bottom member BMC first, and then builds the side wall member BML, the side wall member BMR, and the support member BMS on the bottom member BMC. In this case, the build system SYS repeats the scan operation for moving the target irradiation area EA along the longitudinal direction (for example, the X-axis direction) of the base member BM while irradiating the target irradiation area EA with the build light EL at a desired timing, and the step operation for moving the target irradiation area EA along a direction (for example, the Y-axis direction) intersecting with the longitudinal direction of the base member BM without irradiating the target irradiation area EA with the build light EL. Incidentally, FIG. 10A illustrates a cross-section of the base member BM at a position where the support member BMS is not built, and FIG. 10B illustrates a cross-section of the base member BM at a position where the support member BMS is built.

However, the base member BM that has already been built may be used. In this case, the build system SY may not build the base member BM. The base member BM that has already been built may be placed on the stage 31 as the workpiece W. The base member BM that has already been built may be a turbine blade or may be a turbine blade that needs to be repaired.

After the base member BM is built, the build system SYS performs the build operation described above to build the roof member RM on the base member BM. Specifically, the build system SYS builds a plurality of structural layers SL in sequence to build the roof member RM, which is constituted from the plurality of structural layers SL, on the base member BM. Namely, the build system SYS builds, on the base member BM, the roof member RM that is constituted from the plurality of structural layers SL and that includes the inclination member RML, the inclination member RMR, and the support member RMS.

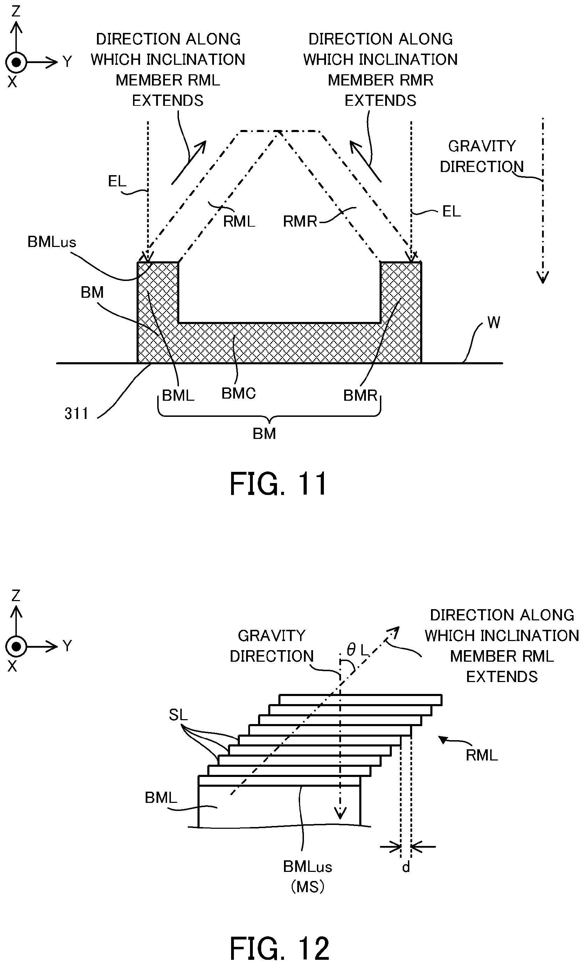

Here, as described above, the inclination member RML is inclined with respect to the side wall member BML. Therefore, in order to build the inclination member RML in a state where the upper surface BMI,us of the side wall member BML on which the inclination member RML is to be built is a horizontal surface, the build system SYS needs to build the inclination part RML extending from the upper surface BMI,us along a direction that is inclined with respect to the gravity direction (namely, along a direction intersecting with the gravity direction corresponding to the Z-axis direction), as illustrated in FIG. 11 that illustrates the inclination member RML that is expected to be built on the side wall member BML. In other words, the build system SYS needs to build the inclination part RML extending along a direction that intersects with a main axis of the build light EL (specifically, an axis along a principal ray, and an axis along the Z-axis in the example illustrated in FIG. 11). In other words, the build system SYS needs to build the inclination part RML extending along a direction that intersects with the placement surface 311 of the workpiece W on which the base member BM is placed.

On the other hand, since the build system SYS builds the 3D structural object ST by building the plurality of structural layers SL in sequence, there is a limit to an angle θL between a direction along which the inclination member RML extends and the gravity direction. This is because, as illustrated in FIG. 12 in which the inclination member RML to be built on the side wall member BML is enlarged, a distance d, which is along a direction that intersects with a direction along which the plurality of structural layers SL are layered (in the example illustrated in FIG. 12, the Y-axis direction), between an edge part of one structural layer SL and an edge part of another structural layer SL to be built on one structural layer SL is not allowed to be larger than an allowable upper limit distance dmax, and thus, an allowable upper limit angle θmax of the angle θL is determined due to the allowable upper limit distance dmax. Namely, it is difficult for the build system SYS to build the inclination member RML that extends along a direction that intersects with the gravity direction at an angle larger than the allowable upper limit angle θmax. Thus, depending on a relationship between the gravity direction and the direction along which the inclination member RML extends from the upper surface BMI,us, there is a possibility that it is difficult for the build system SYS to build the inclination member RML properly. Incidentally, the "angle θL between the direction along which the inclination member RML extends and the gravity direction" here may mean the smaller angle (typically, an angle that is an acute angle) of two angles between an axis extending the direction along which the inclination member RML extends and an axis along the gravity direction (the Z-axis in the example illustrated in FIG. 12).

Moreover, the same can be applied to the inclination member RMR extending along the direction that intersects with the direction along which the inclination member RML extends, although a detailed description is omitted.

Thus, in the present example embodiment, the build system SYS may set a state of the stage 31 to be a state where the angle θL between the direction along which the inclination member RML extends and the gravity direction is equal to or smaller than the allowable upper limit angle θmax by rotating (namely, moving) the stage 31 along a first direction around the rotational axis from the reference position before building the inclination member RML, if necessary. Note that a position of the stage 31 in a state where the placement surface 311 is the horizontal surface may be used as the reference position of the stage 31. Namely, the build system SYS may change the state of the stage 31 to a first state for building the inclination member RML, which is different from a third state for building the base member BM, before building the inclination member RML. Incidentally, as described above, when the stage 31 rotates, the relative positional relationship between the build head 21 and the stage 31 changes. Thus, the build system SYS may change the relative positional relationship between the build head 21 and the stage 31 to a first relationship for building the inclination member RML, which is different from a third relationship for building the base member BM, before building the inclination member RML. Then, the build system SYS may build the inclination member RML in a state where the angle θL between the direction along which the inclination member RML extends and the gravity direction is equal to or smaller than the allowable upper limit angle θmax.

Similarly, the build system SYS may set the state of the stage 31 to be a state where the angle θL between the direction along which the inclination member RMR extends and the gravity direction is equal to or smaller than the allowable upper limit angle θmax by rotating (namely, moving) the stage 31 along a second direction around the rotational axis from the reference position before building the inclination member RMR, if necessary. Incidentally, the second direction, which is the rotational direction of the stage 31 before building the inclination member RMR, is typically an opposite direction of the first direction, which is the rotational direction of the stage 31 before building the inclination member RML, however, it may be the same direction. Namely, the build system SYS may change the state of the stage 31 to a second state for building the inclination member RMR, which is different from the third state for building the base member BM and the first state for building the inclination member RML, before building the inclination member RML. The build system SYS may change the relative positional relationship between the build head 21 and the stage 31 to a second relationship for building the inclination member RMR, which is different from the third relationship for building the base member BM and the first relationship for building the inclination member RML, before building the inclination member RMR. Then, the build system SYS may build the inclination member RMR in a state where the angle θR between the direction along which the inclination member RMR extends and the gravity direction is equal to or smaller than the allowable upper limit angle θmax.

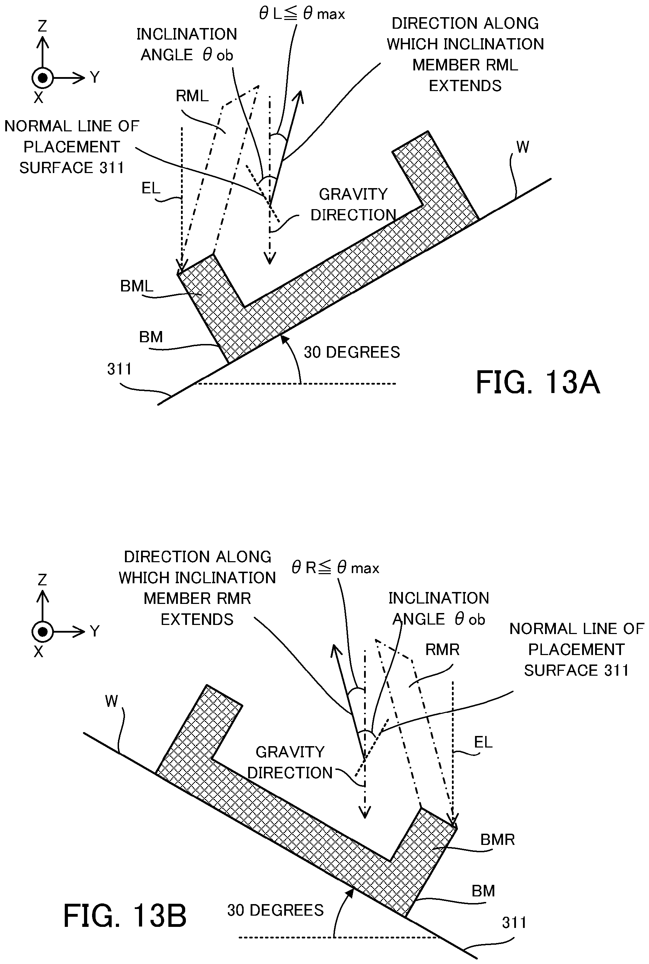

As one example, with reference to FIG. 13A and FIG. 13B, an example of the state of the stage 31 for building inclination members RML and BMR whose inclination angle θob with respect to the placement surface 311 is 45 degree in a situation where the allowable upper limit angle θmax is 15 degrees will be described. Note that the inclination angle θob of the inclination member RML with respect to the placement surface 311 may mean a smaller angle (typically, an angle that is an acute angle) of two angles between an axis along a normal line of the placement surface 311 and the axis along the direction along which the inclination member RML extends. The inclination angle θob of the inclination member RMR with respect to the placement surface 311 may mean a smaller angle (typically, an angle that is an acute angle) of two angles between the axis along the normal line of the placement surface 311 and the axis along the direction along which the inclination member RMR extends.

FIG. 13A is a cross-sectional view that illustrates one example of the state of the stage 31 for building the inclination member RML. As illustrated in FIG. 13A, after building the base member BM so that the longitudinal direction of the base member BM is the X-axis direction, the build system SYS may rotate the stage 31 from the reference position around the X-axis by "90 degrees - (allowable upper limit angle θmax + inclination angle θob)" in a first rotational direction. In an example illustrated in FIG. 13A, the build system SYS may rotate the stage 31 from the reference position around the X axis by "90 degrees - (15 degrees + 45 degrees) = 30 degrees" in a counterclockwise direction. Then, the build system SYS may build the inclination member RML so that the inclination member RML extends in an direction whose angle θL relative to the gravity direction is equal to the allowable upper limit angle θmax (namely, is 15 degrees). In this case, it may be regarded that the build system SYS builds the inclination member RML extending along a direction that intersects with at least one of the gravity direction, the main axis of the build light EL, and the placement surface 311. As a result, the inclination angle of the built inclination member RML with respect to the placement surface 311 is 45 degrees.

Incidentally, in FIG. 13A, the build system SYS builds the inclination member RML so that the angle θL is larger than zero degrees, however, may build the inclination member RML so that the angle θL is zero degrees (namely, so that the inclination member RML extends along the gravity direction). Moreover, the build system SYS may rotate the stage 31 from the reference position around the X axis by a desired first rotational angle in the first rotational direction, and may build the inclination member RML so that the inclination angle of the built inclination member RML with respect to the placement surface 311 is a desired first angle by building the inclination member RML so that the inclination member RML extends in the gravity direction.

FIG. 13B is a cross-sectional view that illustrates one example of the state of the stage 31 for building the inclination member RMR. As illustrated in FIG. 13B, after building the base member BM so that the longitudinal direction of the base member BM is the X-axis direction, the build system SYS may rotate the stage 31 from the reference position around the X-axis by "90 degrees - (allowable upper limit angle θmax + inclination angle θob)" in a second rotational direction opposite to the first rotational direction. In an example illustrated in FIG. 13B, the build system SYS may rotate the stage 31 from the reference position around the X axis by "90 degrees - (allowable upper limit angle θmax + inclination angle θob)" in a clockwise direction. Then, the build system SYS may build the inclination member RMR so that the inclination member RMR extends in an direction whose angle θR relative to the gravity direction is equal to the allowable upper limit angle θmax (namely, is 15 degrees). In this case, it may be regarded that the build system SYS builds the inclination member RMR extending along a direction that intersects with at least one of the gravity direction, the main axis of the build light EL, and the placement surface 311. As a result, the inclination angle of the built inclination member RMR with respect to the placement surface 311 is 45 degrees.

Incidentally, in FIG. 13B, the build system SYS builds the inclination member RMR so that the angle θR is larger than zero degrees, however, may build the inclination member RMR so that the angle θR is zero degrees (namely, so that the inclination member RML extends along the gravity direction). Moreover, the build system SYS may rotate the stage 31 from the reference position around the X axis by a desired second rotational angle in the second rotational direction, and may build the inclination member RMR so that the inclination angle of the built inclination member RMR with respect to the placement surface 311 is a desired second angle by building the inclination member RMR so that the inclination member RMR extends in the gravity direction.

However, the build system SYS may not rotate the stage 31 from the reference position in the first direction around the rotational axis before building the inclination member RML. For example, in a case where the angle θL between the direction along which the inclination member RML extends and the gravity direction is equal to or smaller than the allowable upper limit angle θmax without rotating the stage 31, the build system SYS may not rotate the stage 31 from the reference position in the first direction around the rotational axis before building the inclination member RML. The build system SYS may build the inclination member RML on the base member BM placed on the stage 31 in the reference position. The build system SYS may build the inclination member RML in a situation where the state of the stage 31 is in the third state for building the base member BM. The build system SYS may build the inclination member RML in a situation where the relative positional relationship between the build head 21 and the stage 31 is the third relationship for building the base member BM.

Similarly, the build system SYS may not rotate the stage 31 from the reference position in the second direction around the rotational axis before building the inclination member RMR. For example, in a case where the angle θR between the direction along which the inclination member RMR extends and the gravity direction is equal to or smaller than the allowable upper limit angle θmax without rotating the stage 31, the build system SYS may not rotate the stage 31 from the reference position in the second direction around the rotational axis before building the inclination member RMR. The build system SYS may build the inclination member RMR on the base member BM placed on the stage 31 in the reference position. The build system SYS may build the inclination member RMR in a situation where the state of the stage 31 is in the third state for building the base member BM. The build system SYS may build the inclination member RMR in a situation where the relative positional relationship between the build head 21 and the stage 31 is the third relationship for building the base member BM.

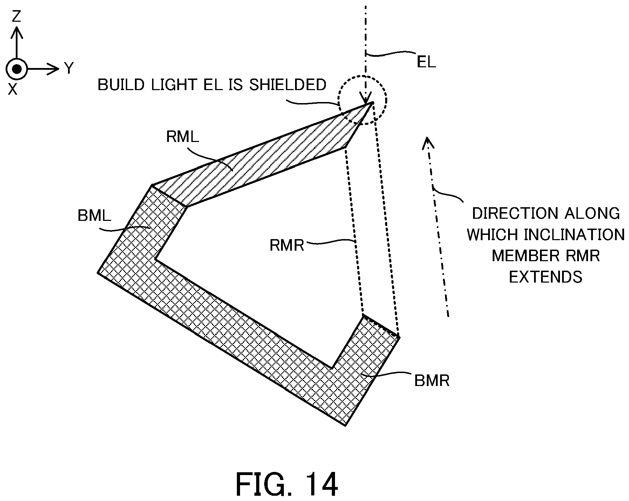

Moreover, in the present example embodiment, the inclination members RML and RMR extend in different directions from each other, as described above. In this case, in a case where a building of one of the inclination members RML and RMR is started after a building of whole of (alternatively, most of) the other one of the inclination members RML and RMR is completed, there is a possibility that the build light EL for building the other one of the inclination members RML and RMR is shielded by one of the inclination members RML and RMR. For example, FIG. 14 illustrates the build light EL with which the side wall member BMR is irradiated to build the inclination member RMR after completing the building of whole of the inclination member RML. As illustrated in FIG. 14, when the inclination member RMR extending along a direction that intersects with the gravity direction at an angle smaller than the allowable upper limit angle θmax is built, there is a possibility that the build light EL is shielded by the inclination member RML that has already been built. As a result, there is a possibility that the build system SYS cannot build the inclination member RMR properly.

Thus, in the present example embodiment, an operation for alternately building the built object include a part of the inclination member RML and the build object including a part of the inclination member RMR is repeated. Namely, the build system SYS builds the roof member RM including the inclination members RML and RMR by performing a building of a part of the inclination member RML and a building of a part of the inclination member RMR in sequence. However, the build system SYS may build the roof member RM including the inclination members RML and RMR without performing a building of a part of the inclination member RML and a building of a part of the inclination member RMR in sequence. For example, the build system SYS may build whole of (alternatively, most of) one of the inclination members RML and RMR and then start to build the other one of the inclination members RML and RMR. For example, in a case where the build light EL is not shielded by the built inclination members RML and RMR that have been already built, the build system SYS may build whole of (alternatively, most of) one of the inclination members RML and RMR and then start to build the other one of the inclination members RML and RMR.

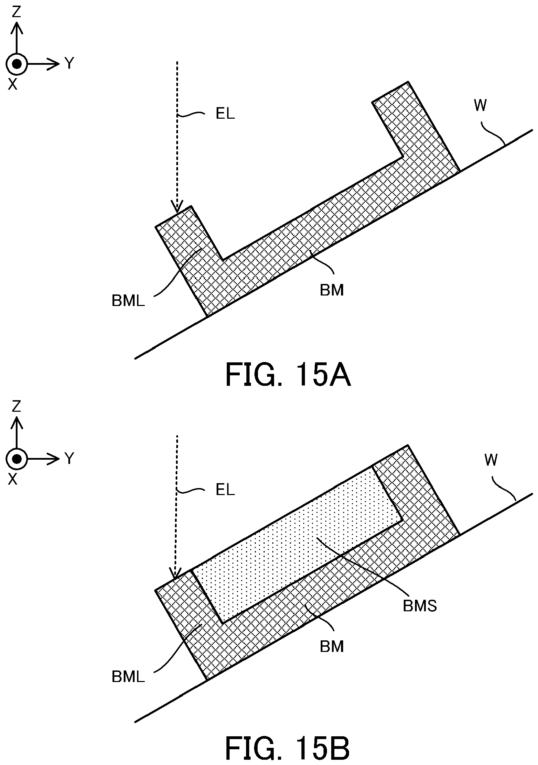

Next, with reference to FIG. 15 to FIG. 30, a flow of the operation for rotating the stage 31 from the reference position before building each of the inclination members RML and RMR and alternately building the build object including a part of the inclination member RML and the build object including a part of the inclination member RMR will be further described.

After the base member BM is built, the build system SYS builds a part of the inclination member RML. In this case, as illustrated in Fig. 15A and FIG. 15B, the build system SYS rotates the stage 31 from the reference position in the first direction around the rotational axis (for example, the X-axis) before building the inclination member RML. Note that FIG. 15A illustrates a cross-section of the base member BM at the position where the support member BMS has not been built, and FIG. 15B illustrates a cross-section of the base member BM at the position where the support member BMS has been built. Then, as illustrated in FIG. 15A, the build system SYS irradiates an area of the side wall member BML at which a part of the inclination member RML is to be built with the build light EL, in order to build a part of the inclination member RML. Moreover, at the position where the support member BMS has been built, the build system SYS irradiates the area of the side wall member BML at which a part of the inclination member RML is to be built and area of the support member BMS at which a part of the support member RMS is to be built with the build light EL, in order to build a part of the inclination member RML and a part of the support member RMS, as illustrated in FIG. 15B.

Even in a case where the roof member RM is built, the build system SYS may repeat the scan operation for moving the target irradiation area EA along a first direction (for example, the longitudinal direction of the base member BM(for example, the X-axis direction)) while irradiating the target irradiation area EA with the build light EL at the desired timing, and the step operation for moving the target irradiation area EA along a second direction (for example, the a direction intersecting with the longitudinal direction of the base member BM (for example, Y-axis direction)) without irradiating the target irradiation area EA with the build light EL. For example, in a case where a moving direction of the target irradiation area EA by the scan operation is same as the direction parallel to the rotational axis of the stage 31 (for example, X-axis), the build system SYS may perform the scan operation for irradiating the side wall member BML and the support member BMS with the build light EL while changing the relative positional relationship between the build head 21 and the stage 31 in the direction (for example, the X-axis direction) parallel to the rotational axis of the stage 31. Alternatively, for example, in a case where the moving direction of the target irradiation area EA by the scan operation intersects with the direction parallel to the rotational axis of the stage 31 (for example, X-axis), the build system SYS may perform the scan operation for irradiating the side wall member BML and the support member BMS with the build light EL while simultaneously changing the relative positional relationship between the build head 21 and the stage 31 in the direction (for example, the X-axis direction) parallel to the rotational axis of the stage 31 and the relative positional relationship between the build head 21 and the stage 31 in the direction (for example, the Y-axis direction) perpendicular to the rotational axis of the stage 31.

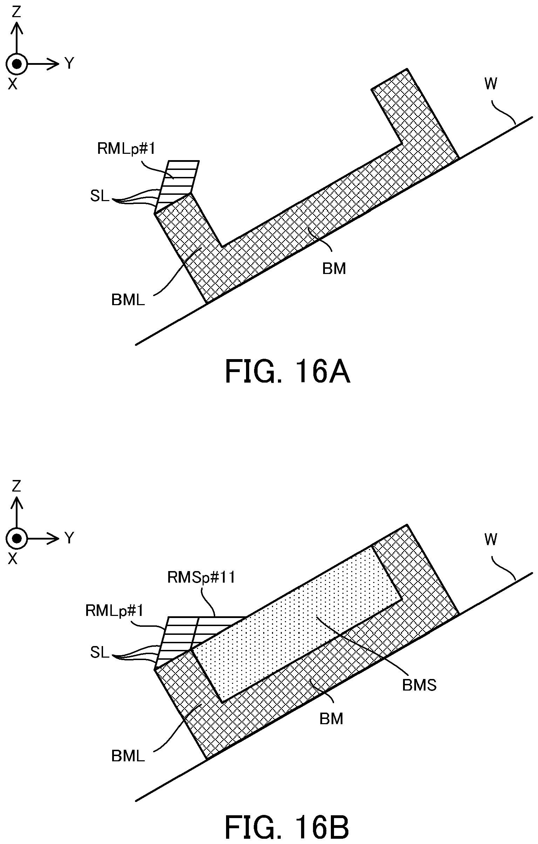

As a result, as illustrated in FIG. 16A, a partial inclination member RMI,p#1, which is a part of the inclination member RML, is built on the side wall member BML at the position where the support member BMS has not been built (namely, the position where the support member RMS may not be necessarily built). Moreover, as illustrated in FIG. 16B, the partial inclination member RMLp#1 is built on the side wall member BML and a partial support member RMSp#11, which is a part of the support member RMS and which is connected to the partial inclination member RMI,p#1, is built on the support member BMS at the position where the support member BMS has been built (namely, at the position where the support member RMS is built).

The partial inclination member RMI,p#1 may be a member including a single structural layer SL. The partial support member RMSp#11, which is built together with the partial inclination member RMLp#1, may also be a member including a single structural layer SL. In this case, the build system SYS builds the partial inclination member RMI,p#1 and the partial support member RMSp#11 by performing the build operation for building the single structural layer SL. Alternatively, the partial inclination member RMI,p#1 may be a member including a plurality of structural layers SL. The partial support member RMSp#11, which is built together with the partial inclination member RMI,p#1, may also be a member including a plurality of structural layers SL. In this case, the build system SYS builds the partial inclination member RMLp#1 and the partial support member RMSp#11 by performing the build operation for building the plurality of structural layers SL. FIG. 16A and FIG. 16B illustrate an example in which each of the partial inclination member RMI,p#1 and the partial support member RMSp#11 includes the plurality of structural layers SL.

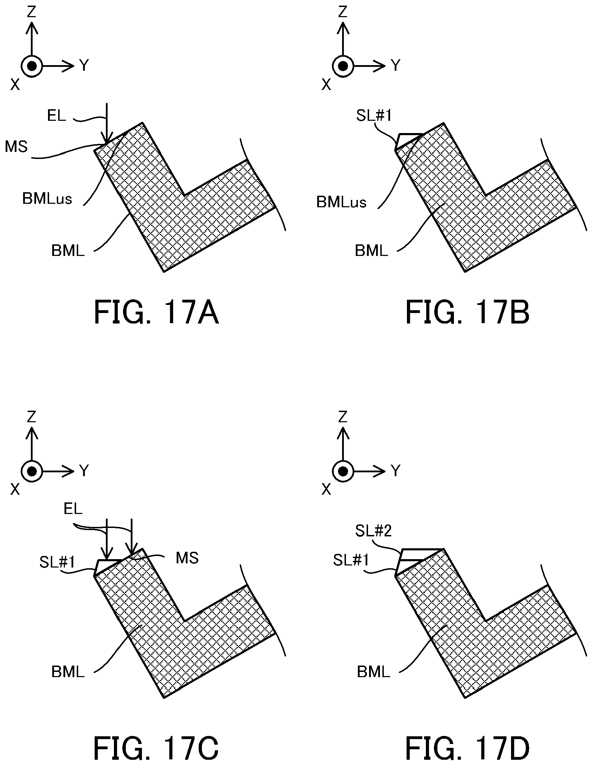

In a case where the partial inclination member RMLp#1 and the partial support member RMSp#11 includes the plurality of structural layers SL, the number of times scan operations performed to build one structural layer SL may be different from the number of times scan operations performed to build another structural layer SL on the one structural layer SL. For example, FIG. 17A to FIG. 17D are cross-sectional views that illustrate the process for building two structural layers SL that constitute the partial inclination member RMLp#1. As illustrated in FIG. 17A, when the first structural layer SL#1 is built on the upper surface BMLus of the side wall member BML, the build system SYS may set a part of the upper surface BMI,us to be the build surface MS and then perform the scan operation for irradiating the build surface MS with the build light EL. The reason why not whole of the upper surface BMI,us but a part of the upper surface BMI,us, is set to be the build surface MS is that the upper and lower surfaces of the structural layer SL to be built are, in principle, planes along the horizontal plane, while the upper surface BMI,us on which the build surface MS is set is a plane intersecting with the horizontal plane. As a result, as illustrated in FIG. 17B, the first structural layer SL#1 is built on a part of the upper surface BMI,us. Then, as illustrated in FIG. 17C, the build system SYS may set a part of an upper surface of the first structural layer SL#1 and another part of the upper surface BMI,us to be the build surface MS and then perform the scan operation for irradiating the build surface MS with the build light EL in order to build the second structural layer SL#2. As a result, as illustrated in FIG. 17D, the second structural layer SL#2 is built on the upper surface of the first structural layer SL#1 and another part of the upper surface BMI,us.

Here, in a case where the second structural layer SL#2 is built, the build surface MS is wider in a direction (in the example illustrated in FIG. 17C, the Y-axis direction) that intersects the moving direction (in the example illustrated in FIG. 17C, the X-axis direction) of the target irradiation area EA by the scan operation, compared to a case where the first structural layer SL#1 is built. Thus, in the case where the second structural layer SL#2 is built, the number of scan operations is larger, compared to the case where the second structural layer SL#1 is built. In the example illustrated in FIG. 17A and FIG. 17C, one scan operation is performed when the first structural layer SL#1 is built, and two scan operations are performed when the second structural layer SL#2 is built. In a case where the number of times the scan operation is performed is adjusted in this manner, the structural layer SL is properly built even in a case where the build surface MS is set on the surface that intersects with the horizontal plane.

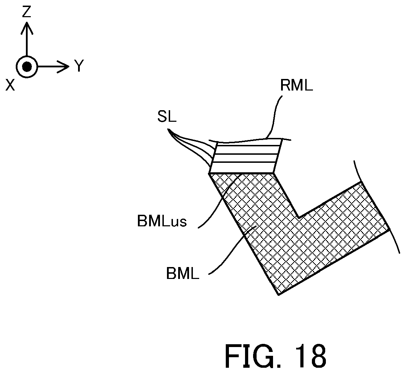

Alternatively, the reason why the upper surface BMI,us of the side wall member BML on which the structural layer SL is to be built is the plane that intersects with the horizontal plane is that the stage 31 is rotated (namely, moved) from the reference position after the base member BM is built and before the inclination member RML is built. Thus, as illustrated in FIG. 18, the build system SYS may build the base member BM so that the upper surface BMI,us of the side wall member BML is the surface parallel to the horizontal plane in a situation where the stage 31 has been rotated from the reference position to build the inclination member RML. For example, the build system SYS may build the base member BM so that the upper surface BMLus of the side wall member BML is the surface intersecting with the horizontal plane when the base member BM is built. In this case, the build system SYS may build the side wall member BML whose upper surface BMI,us is the surface intersecting the horizontal plane by performing the build operation described above. Alternatively, the build system SYS may build the side wall member BML whose upper surface BMLus is the surface intersecting with the horizontal plane by performing the build operation described above to build the side wall member BML whose upper surface BMLus is the surface parallel to the horizontal plane, and then performing a removal processing of a part of the side wall member BML. For example, the build system SYS may perform the removal processing of a part of the side wall member BML by irradiating a part of the side wall member BML with the build light EL.

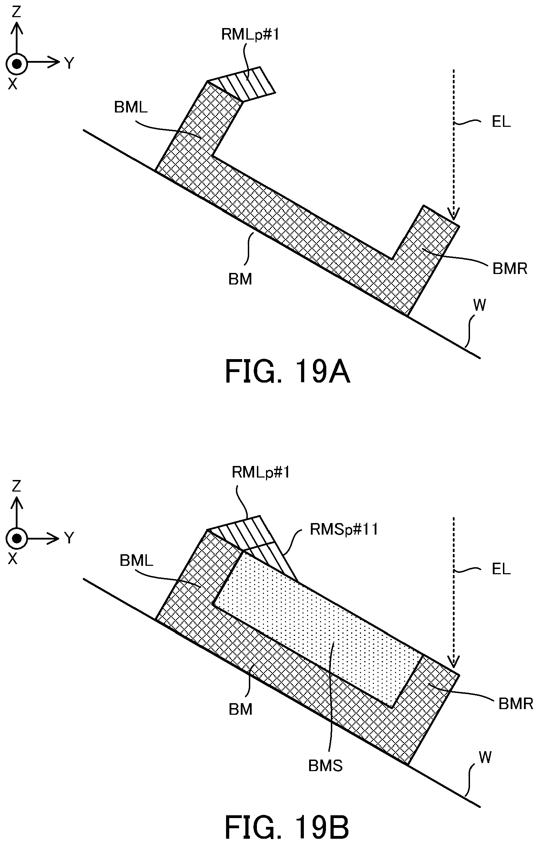

After the partial inclination member RMLp#1 and the partial support member RMSp#11 are built, the build system SYS builds a part of the inclination member RMR. In this case, as illustrated in FIG. 19A and FIG. 19B, the build system SYS rotates the stage 31 from the reference position in the second direction around the rotational axis (for example, the X-axis) before building the inclination member RMR. Note that FIG. 19A illustrates a cross-section of the base member BM at the position where the support member BMS has not been built, and FIG. 19B illustrates a cross-section of the base member BM at the position where the support member BMS has been built. Then, as illustrated in FIG. 19A, the build system SYS irradiates an area of the side wall member BMR at which a part of the inclination member RMR is to be built with the build light EL, in order to build a part of the inclination member RMR. Moreover, at the position where the support member BMS has been built, the build system SYS irradiates the area of the side wall member BMR at which a part of the inclination member RMR is to be built and an area of the support member BMS at which a part of the support member RMS is to be built with the build light EL, in order to build a part of the inclination member RMR and a part of the support member RMS, as illustrated in FIG. 19B.

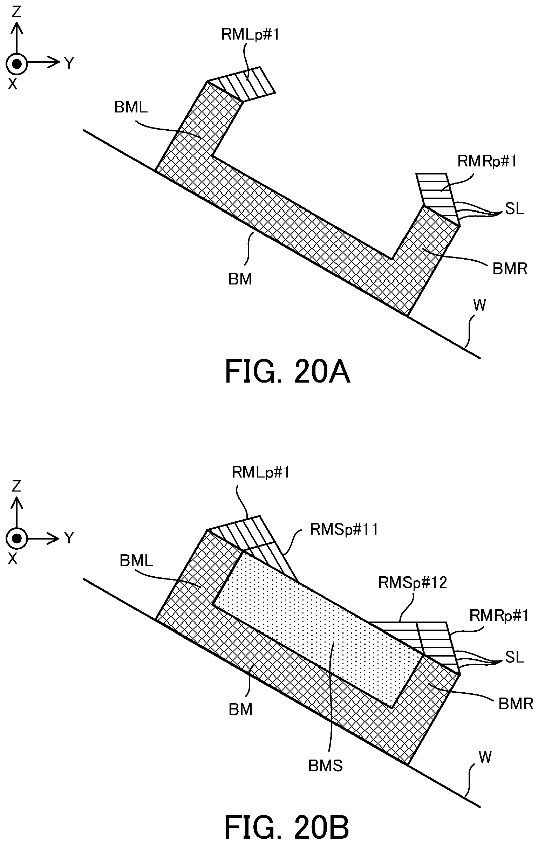

As a result, as illustrated in FIG. 20A, a partial inclination member RMRp#1, which is a part of the inclination member RMR, is built on the side wall member BML at the position where the support member BMS has not been built (namely, the position where the support member RMS may not be necessarily built). Moreover, as illustrated in FIG. 20B, the partial inclination member RMRp#1 is built on the side wall member BMR and a partial support member RMSp#12, which is a part of the support member RMS and which is connected to the partial inclination member RMRp#1, is built on the support member BMS at the position where the support member BMS has been built (namely, at the position where the support member RMS is built).

Note that an operation for building the partial inclination member RMRp#1 may be the same as an operation for building the partial inclination member RMI,p#1. Thus, the above-described description related to the partial inclination member RMI,p#1 can be diverted to the description related to the partial inclination member RMRp#1 by replacing the term "partial inclination member RMI,p#1" with the term "partial inclination member RMRp#1". Thus, the description related to the partial inclination member RMRp#1 is omitted.

Moreover, an operation for building the partial support member RMSp#12 may be the same as an operation for building the partial support member RMSp#11. Thus, the above-described description related to the partial support member RMSp#11 can be diverted to the description related to the partial support member RMSp#12 by replacing the term "partial support member RMSp#11" with the term "partial support member RMSp#12". Thus, the description related to the partial support member RMSp#12 is omitted.

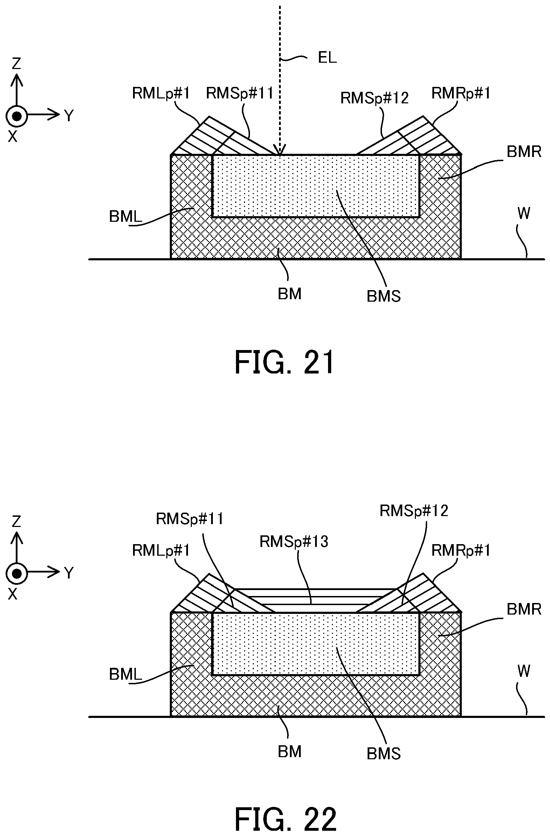

After the partial inclination member RMRp#1 and the partial support member RMSp#12 are built, the build system SYS builds a part of the support member RMS between the partial support member RMSp#11 and the partial support member RMSp#12. In this case, as illustrated in FIG. 21, the build system SYS rotates the stage 31 around the rotational axis (for example, the X-axis) to return the stage 31 to the reference position before building the support member RMS. Then, as illustrated in FIG. 21, the build system SYS irradiates an area of the support member BMS at which the support member RMS is to be built with the build light EL in order to build a part of the support member RMS. As a result, as illustrated in FIG. 22, a partial support member RMSp#13, which is a part of the support member RMS, is built on the support member BMS. Namely, the partial support member RMSp#13 located between the partial support member RMSp#11 and the partial support member RMSp#12 is built on the support member BMS. The partial support member RMSp#13 is typically a member that connects the partial support member RMSp#11 and the partial support member RMSp#12. Note that at least a part of the partial support member RMSp#13 may be built on at least one of the partial support members RMSp#11 and RMSp#12. In this case, the build system SYS may irradiate at least a part of the partial support members RMSp#11 and #12 with the build light EL in order to build the partial support member RMSp#13.

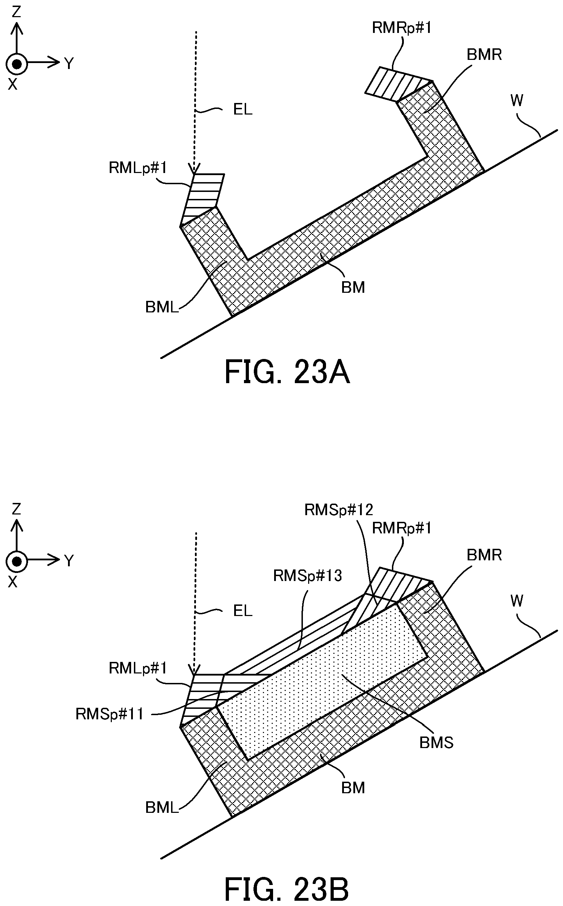

Then, the build system SYS builds a part of the inclination member RML on the partial inclination member RMI,p#1. In this case, as illustrated in Fig. 23A and FIG. 23B, the build system SYS rotates the stage 31 from the reference position in the first direction around the rotational axis (for example, the X-axis) before building a part of the inclination member RML. Note that FIG. 23A illustrates a cross-section of the base member BM at the position where the support member BMS has not been built, and FIG. 23B illustrates a cross-section of the base member BM at the position where the support member BMS has been built. Then, as illustrated in FIG. 23A, the build system SYS irradiates an area of the partial inclination member RMI,p#1 at which a part of the inclination member RML is to be built with the build light EL, in order to build a part of the inclination member RML. Moreover, at the position where the support member BMS has been built, the build system SYS further irradiates an area of the partial support members RMSp#11 to #13 at which a part of the support member RMS is to be built with the build light EL, in order to build a part of the support member RMS on the partial support members RMSp#11 to #13, as illustrated in FIG. 23B.

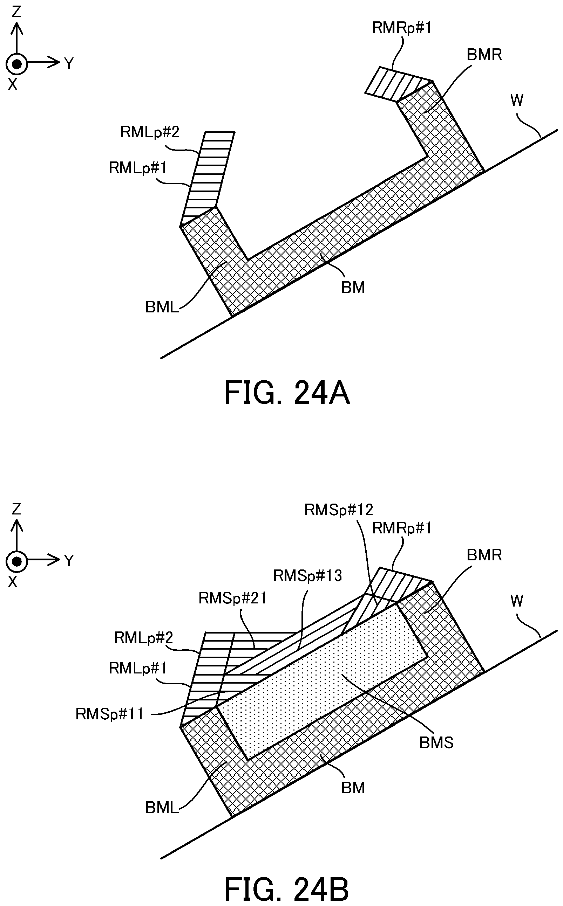

As a result, as illustrated in FIG. 24A, a partial inclination member RMLp#2, which is a part of the inclination member RML, is built on the partial inclination member RMI,p#1 at the position where the support member BMS has not been built (namely, the position where the support member RMS may not be necessarily built). Moreover, as illustrated in FIG. 24B, a partial support member RMSp#21, which is a part of the support member RMS and which is connected to the partial inclination member RMI,p#2, is built on at least a part of the partial support members RMSp#11 to #13 at the position where the support member BMS has been built (namely, at the position where the support member RMS is built).

Note that an operation for building the partial inclination member RMLp#2 may be the same as an operation for building the partial inclination member RMI,p#1. Thus, the above-described description related to the partial inclination member RMI,p#1 can be diverted to the description related to the partial inclination member RMI,p#2 by replacing the term "partial inclination member RMLp#1" with the term "partial inclination member RMI,p#2". Thus, the description related to the partial inclination member RMI,p#2 is omitted. Note that a moving amount (typically, a rotational angle) of the stage 31 from the reference position in building the partial inclination member RMI,p#2 may be the same as or different from a moving amount (typically, a rotational angle) of the stage 31 from the reference position in building the partial inclination member RMI,p#1.

Moreover, an operation for building the partial support member RMSp#21 may be the same as an operation for building the partial support member RMSp#11. Thus, the above-described description related to the partial support member RMSp#11 can be diverted to the description related to the partial support member RMSp#21 by replacing the term "partial support member RMSp#11" with the term "partial support member RMSp#21". Thus, the description related to the partial support member RMSp#21 is omitted.

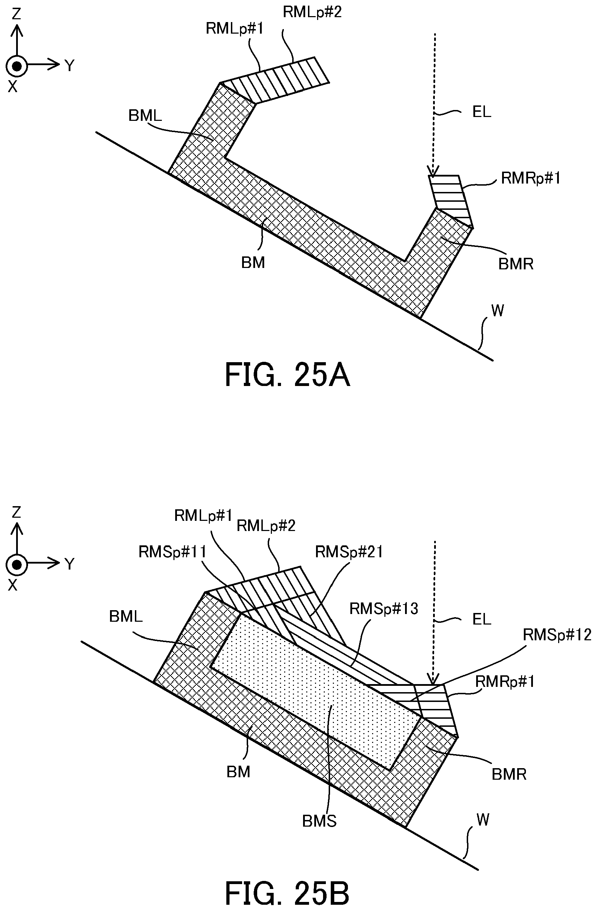

After the partial inclination member RMI,p#2 and the partial support member RMSp#21 are built, the build system SYS builds a part of the inclination member RMR. In this case, as illustrated in FIG. 25A and FIG. "5B, the build system SYS rotates the stage 31 from the reference position in the second direction around the rotational axis (for example, the X-axis) before building the inclination member RMR. Note that FIG. 25A illustrates a cross-section of the base member BM at the position where the support member BMS has not been built, and FIG. 25B illustrates a cross-section of the base member BM at the position where the support member BMS has been built. Then, as illustrated in FIG. 25A, the build system SYS irradiates an area of the partial inclination member RMRp#1 at which a part of the inclination member RMR is to be built with the build light EL, in order to build a part of the inclination member RMR. Moreover, at the position where the support member BMS has been built, the build system SYS further irradiates an area of the partial support members RMSp#11 to #13 at which a part of the support member RMS is to be built with the build light EL, in order to build a part of the support member RMS on the partial support members RMSp#11 to #13, as illustrated in FIG. 19B.

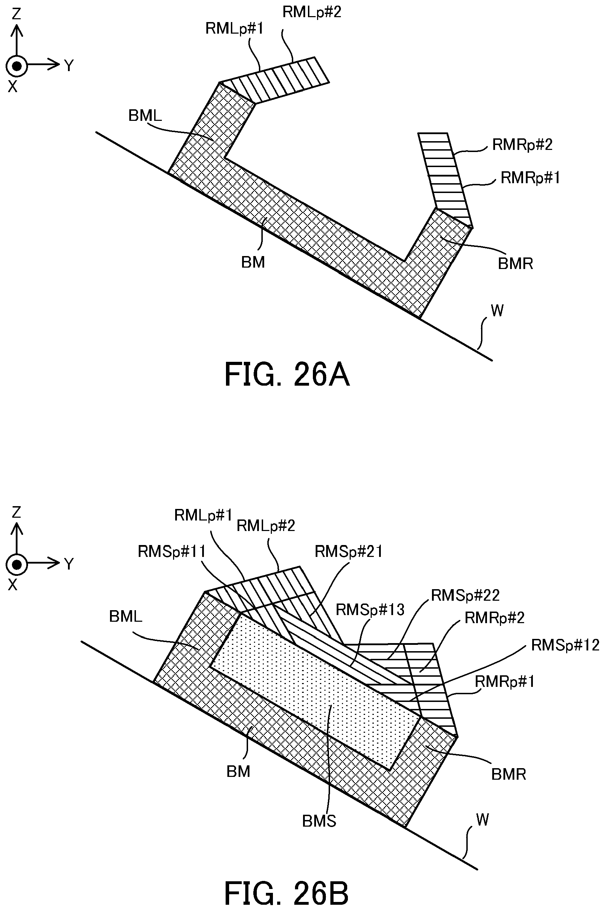

As a result, as illustrated in FIG. 26A, a partial inclination member RMRp#2, which is a part of the inclination member RMR, is built on the partial inclination member RMRp#1 at the position where the support member BMS has not been built (namely, the position where the support member RMS may not be necessarily built). Moreover, as illustrated in FIG. 26B, a partial support member RMSp#22, which is a part of the support member RMS and which is connected to the partial inclination member RMRp#2, is built on at least a part of the partial support members RMSp#11 to #13 at the position where the support member BMS has been built (namely, at the position where the support member RMS is built).

Note that an operation for building the partial inclination member RMRp#2 may be the same as an operation for building the partial inclination member RMRp#1. Thus, the above-described description related to the partial inclination member RMRp#1 can be diverted to the description related to the partial inclination member RMRp#2 by replacing the term "partial inclination member RMRp#1" with the term "partial inclination member RMRp#2". Thus, the description related to the partial inclination member RMRp#2 is omitted. Note that a moving amount (typically, a rotational angle) of the stage 31 from the reference position in building the partial inclination member RMRp#2 may be the same as or different from a moving amount (typically, a rotational angle) of the stage 31 from the reference position in building the partial inclination member RMRp#1.

Moreover, an operation for building the partial support member RMSp#22 may be the same as an operation for building the partial support member RMSp#12. Thus, the above-described description related to the partial support member RMSp#12 can be diverted to the description related to the partial support member RMSp#22 by replacing the term "partial support member RMSp#12" with the term "partial support member RMSp#22". Thus, the description related to the partial support member RMSp#22 is omitted.

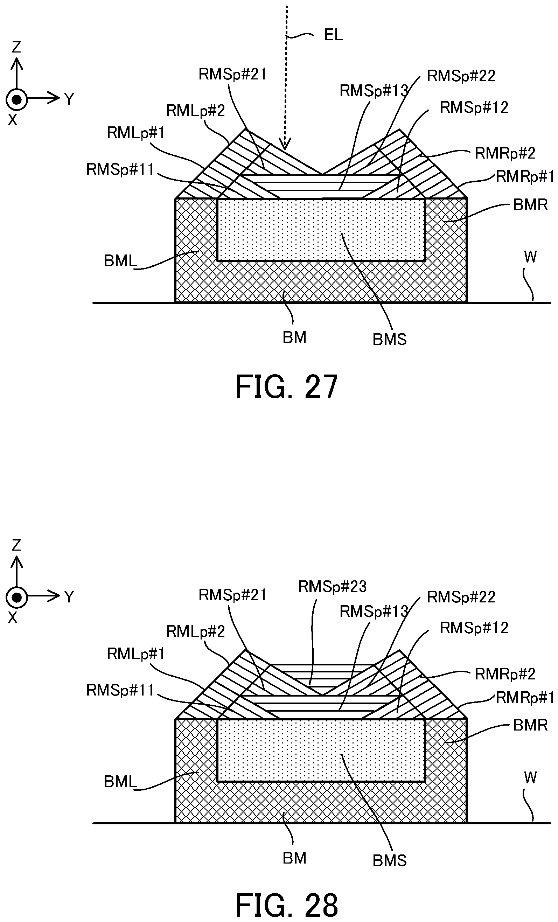

After the partial inclination member RMRp#2 and the partial support member RMSp#22 are built, the build system SYS builds a part of the support member RMS between the partial support member RMSp#21 and the partial support member RMSp#22. In this case, as illustrated in FIG. 27, the build system SYS rotates the stage 31 around the rotational axis (for example, the X-axis) to return the stage 31 to the reference position before building the support member RMS. Then, as illustrated in FIG. 28, the build system SYS irradiates an area at which the support member RMS is to be built with the build light EL in order to build a part of the support member RMS. As a result, as illustrated in FIG. 28, a partial support member RMSp#23, which is a part of the support member RMS, is built on the support member BMS. Namely, the partial support member RMSp#23 located between the partial support member RMSp#21 and the partial support member RMSp#22 is built on the support member BMS. The partial support member RMSp#23 is typically a member that connects the partial support member RMSp#21 and the partial support member RMSp#22.

Note that an operation for building the partial support member RMSp#23 may be the same as an operation for building the partial support member RMSp#13. Thus, the above-described description related to the partial support member RMSp#13 can be diverted to the description related to the partial support member RMSp#23 by replacing the term "partial support member RMSp#13" with the term "partial support member RMSp#23". Thus, the description related to the partial support member RMSp#23 is omitted.

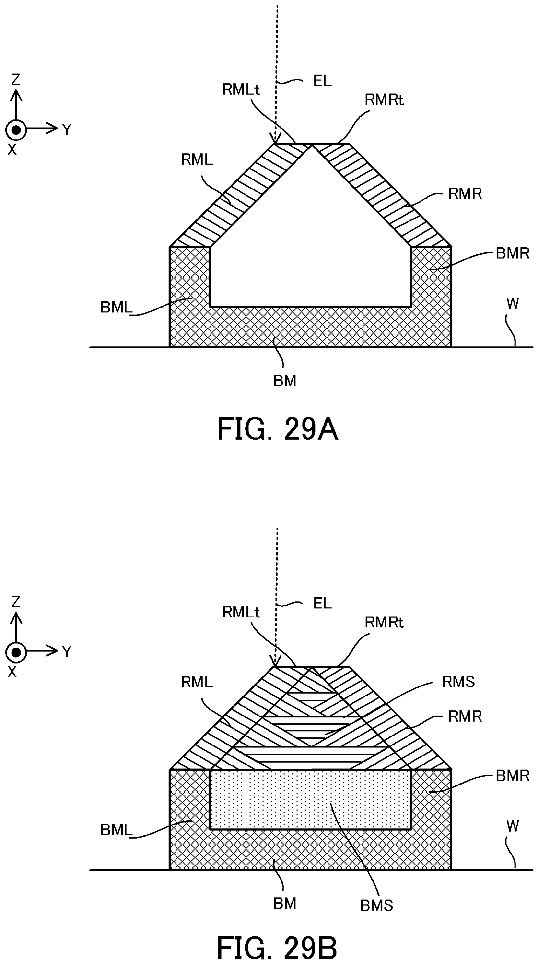

Then, the same operations described above are repeated until the building of the inclination member RML, the inclination member RMR, and the support member RMS is completed. As a result, as illustrated in FIG. 29A and FIG. 29B, the inclination member RML, the inclination member RMR, and the support member RMS are built on the base member BM. Note that FIG. 29A illustrates a cross-section of the inclination member RML and the inclination member RMR at a position where the support members BMS and RMS have not been built, and FIG. 29B illustrates a cross-section of the inclination member RML, the inclination member RMR and the support member RMS at a position where the support members BMS and RMS have been built.

After the building of the inclination member RML, the inclination member RMR, and the support member RMS is completed, the build system SYS may built a connection member RMC that connects the inclination member RML and the inclination member RMR by performing the build operation described above. In this case, the build system SYS may rotate the stage 31 around the rotational axis (for example, X-axis) to return the stage 31 to the reference position before building the connection member RMC. However, in a case where the stage 31 is already located at the reference position, the build system SYS may not rotate the stage 31. Then, as illustrated in FIG. 29A and FIG. 29B, the build system SYS irradiates at least a part of an end RMI,t of the inclination member RML with the build light EL in order to build the connection member RMC. As a result, the melt pool MP is formed on at least a part of the end RMI,t of the inclination member RML. Furthermore, the build system SYS irradiates at least a part of an end RMRt of the inclination member RMR with the build light EL in sequence. As a result, the melt pool MP is formed on at least a part of the end RMRt of the inclination member RMR. In this case, the melt pool MP may be formed over at least a part of the end RMI,t of the inclination member RML and at least a part of the end RMRt of the inclination member RMR. Alternatively, the melt pool MP may be formed on at least a part of either one of the end RMI,t of the inclination member RML and the end RMRt of the inclination member RMR, and then, the melt pool MP may be formed on at least a part of the other one of the end RMI,t of the inclination member RML and the end RMRt of the inclination member RMR.

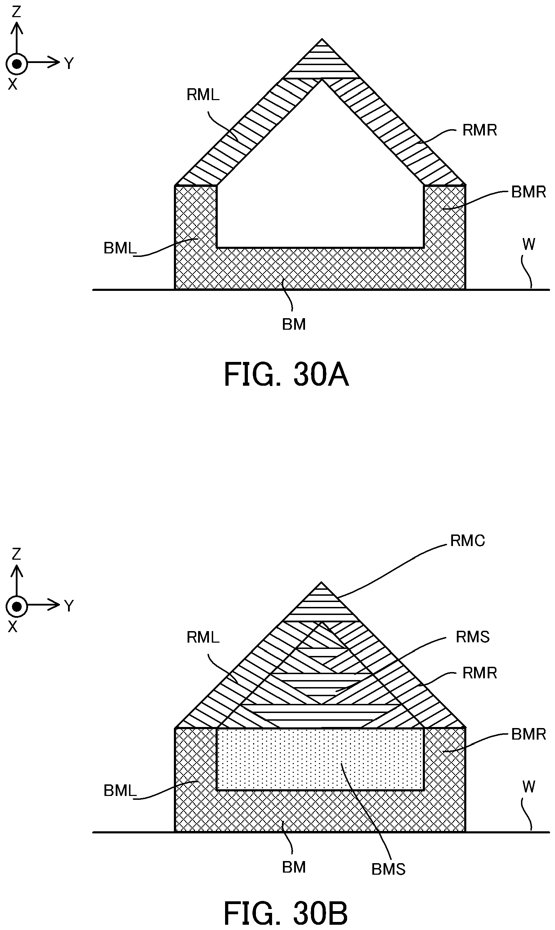

As a result, as illustrated in FIG. 30A and FIG. 30B, the connection member RMC connecting the inclination member RML and the inclination member RMR is built on the inclination members RML and RMR. As a result, the building of the 3D structural object ST (for example, the turbine blade BL) illustrated in FIG. 6 to FIG. 9 is completed. Note that FIG. 30A illustrates a cross-section of the 3D structural object ST at the position where the support members BMS and RMS have not been built, and FIG. 30B illustrates a cross-section of the 3D structural object ST at the position where the support members BMS and RMS have been built.

Incidentally, in this example, each member is an integrated member (monolithic member) because the Laser Metal Deposition is used. Thus, each member may be referred to as each part.

### (3) Technical Effect

As described above, the build system SYS in the present example embodiment performs, in sequence, the building of the partial inclination member RMI,p, which is a part of the inclination member RML, and the first partial support member RMSp, which is a part of the support member RMS, the building of the partial inclination member RMRp, which is a part of the inclination member RMR, and the second partial support member RMSp, which is a part of the support member RMS, and the building of the third partial support member RMSp, which is a part of the support member RMS and is located between the first partial support member RMSp and the second partial support member RMSp, in order to build the roof member RM including the inclination members RML and RMR and the support member RMS on the base member BM. Thus, the build system SYS can reduce the possibility of the occurrence of such a technical problem (see FIG. 14) that the build light EL is shielded by a part of the 3D structural object ST that has already been built.

Moreover, the build system SYS rotates the stage 31 from the reference position in the first direction around the rotational axis before building the inclination member RML, and then starts building the inclination member RML. Thus, the build system SYS can build the inclination member RML in a state where the angle θL between the direction along which the inclination member RML extends and the gravity direction is equal to or smaller than the allowable upper limit angle θmax. Namely, the build system SYS can reduce the possibility of the occurrence of such a technical problem (see FIG. 12) that the inclination member RML cannot be built due to the restriction of the allowable upper limit angle θmax.

Incidentally, in the above-described description, the build system SYS performs, in sequence, the building of the partial inclination member RMI,p and the first partial support member RMSp, the building of the partial inclination member RMRp and the second partial support member RMSp, and the building of the third partial support member RMSp. However, the build system SYS may not build the third partial support member RMSp located between the first partial support member RMSp and the second partial support member RMSp. In this case, at least a part of the third partial support member RMSp may be built as a part of the first partial support member RMSp and the second partial support member RMSp. Alternatively, the build system SYS may perform, in sequence, the building of either one of the partial inclination members RMLp and RMRp and the partial support member RMSp, and the building the other one of the partial inclination members RMI,p and RMRp. Namely, the build system SYS may not build the partial support member RMSp together with the other one of the partial inclination members RMI,p or RMRp. Namely, the build system SYS may build whole of the support member RMS together with either one of the inclination members RML and RMR.

Moreover, in the above-described description, the 3D structural object ST includes the support member RMS. However, the 3D structural object ST may not include the support member RMS. In this case, the build system SYS may perform, in sequence, the building of the partial inclination member RMI,p and the building of the partial inclination member RMRp.

### (4) Modified Example

Next, a modified example of the build system SYS will be described.

### (4-1) First Modified Example

As described above, in order to build the 3D structural object ST, the build system SYS repeats the scan operation for moving the target irradiation area EA relative to the build surface MS along either one of the X-axis direction and the Y-axis direction while irradiating the target irradiation area EA with the build light EL at the desired timing, and the step operation for moving the target irradiation area EA relative to the build surface MS along the other one of the X-axis direction and the Y-axis direction without irradiating the target irradiation area EA with the build light EL.

In a second modified example, the build system SYS may change the moving direction of the target irradiation area EA by the scan operation. Namely, the build system SYS may change the moving direction of the target irradiation area EA by the scan operation from a first moving direction to a second moving direction that is different from the first moving direction.

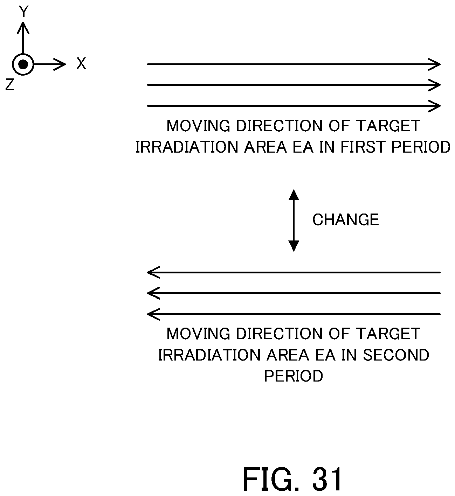

The first moving direction may be opposite to the second moving direction. As one example, in a case where the target irradiation area EA moves along the X-axis direction by the scan operation, the build system SYS may change the moving direction of the target irradiation area EA by the scan operation from the first moving direction that is directed from the -X side toward the +X side to the second moving direction that is directed from the +X side to the -X side at a desired timing, as illustrated in FIG. 31. Alternatively, the build system SYS may change the moving direction of the target irradiation area EA by the scan operation from the second moving direction that is directed from the +X side to the -X side to the first moving direction that is directed from the -X side to the +X side at the desired timing.

The build system SYS may change the moving direction of the target irradiation area EA by the scan operation so that the target irradiation area EA moves along the first moving direction by the scan operation in a first period and the target irradiation area EA moves along the second moving direction by the scan operation in a second period that is different from the first period.

The first period may include a period for building a first structural layer SL, and the second period may include a period for building a second structural layer SL that is different from the first structural layer SL. In this case, the build system SYS may change the moving direction of the target irradiation area EA by the scan operation so that the target irradiation area EA moves along the first moving direction by the scan operation in the first period for building the first structural layer SL and the target irradiation area EA moves along the second moving direction by the scan operation in the second period for building the second structural layer SL. As one specific example, in order to build first to N-th (note that N is an integer that is equal to or larger than 2) structural layers SL, the build system SYS may change the moving direction of the target irradiation area EA by the scan operation so that the target irradiation area EA moves along the first moving direction by the scan operation in the first period for building the i-th (note that i is an odd number that is equal to or larger than 1 and that is equal to or smaller than N) structural layer SL and the target irradiation area EA moves along the second moving direction by the scan operation in the second period for building the j-th (note that j is an even number that is equal to or larger than 1 and that is equal to or smaller than N) structural layer SL.

The first period may include a period for building a first partial inclination member RMI,p, and the second period may include a period for building a second partial inclination member RMLp that is different from the first partial inclination member RMLp. In this case, the build system SYS may change the moving direction of the target irradiation area EA by the scan operation so that the target irradiation area EA moves along the first moving direction by the scan operation in the first period for building the first partial inclination member RMI,p and the target irradiation area EA moves along the second moving direction by the scan operation in the second period for building the second partial inclination member RMLp. As one specific example, in order to build first to M-th (note that M is an integer that is equal to or larger than 2) partial inclination members RMLp, the build system SYS may change the moving direction of the target irradiation area EA by the scan operation so that the target irradiation area EA moves along the first moving direction by the scan operation in the first period for building the i-th (note that i is an odd number that is equal to or larger than 1 and that is equal to or smaller than M) partial inclination member RMI,p and the target irradiation area EA moves along the second moving direction by the scan operation in the second period for building the j-th (note that j is an even number that is equal to or larger than 1 and that is equal to or smaller than M) partial inclination member RMLp.

The first period may include a period for building a first partial inclination member RMRp, and the second period may include a period for building a second partial inclination member RMRp that is different from the first partial inclination member RMRp. In this case, the build system SYS may change the moving direction of the target irradiation area EA by the scan operation so that the target irradiation area EA moves along the first moving direction by the scan operation in the first period for building the first partial inclination member RMRp and the target irradiation area EA moves along the second moving direction by the scan operation in the second period for building the second partial inclination member RMRp. As one specific example, in order to build first to L-th (note that L is an integer that is equal to or larger than 2) partial inclination members RMRp, the build system SYS may change the moving direction of the target irradiation area EA by the scan operation so that the target irradiation area EA moves along the first moving direction by the scan operation in the first period for building the i-th (note that i is an odd number that is equal to or larger than 1 and that is equal to or smaller than L) partial inclination member RMRp and the target irradiation area EA moves along the second moving direction by the scan operation in the second period for building the j-th (note that j is an even number that is equal to or larger than 1 and that is equal to or smaller than L) partial inclination member RMRp.

The first period may include a period for building a first partial support member RMSp, and the second period may include a period for building a second partial support member RMSp that is different from the first partial support member RMSp. In this case, the build system SYS may change the moving direction of the target irradiation area EA by the scan operation so that the target irradiation area EA moves along the first moving direction by the scan operation in the first period for building the first partial support member RMSp and the target irradiation area EA moves along the second moving direction by the scan operation in the second period for building the second partial support member RMSp. As one specific example, in order to build first to O-th (note that O is an integer that is equal to or larger than 2) partial support members RMSp, the build system SYS may change the moving direction of the target irradiation area EA by the scan operation so that the target irradiation area EA moves along the first moving direction by the scan operation in the first period for building the i-th (note that i is an odd number that is equal to or larger than 1 and that is equal to or smaller than O) partial support member RMSp and the target irradiation area EA moves along the second moving direction by the scan operation in the second period for building the j-th (note that j is an even number that is equal to or larger than 1 and that is equal to or smaller than O) partial support member RMSp.

In a case where the moving direction of the target irradiation area EA is changeable in this manner, there is a lower possibility that a gap is generated between the support member RMS and the inclination members RML and RMR, compared to a case where the moving direction of the target irradiation area EA is not changeable. Namely, a building accuracy of the roof member RM is improved. Therefore, in a first modified example, the build system SYS can improve the building accuracy of the roof member RM while achieving the above-described effect.

### (4-2) Second Modified Example

In the above-described description, the build system SYS builds the 3D structural object ST including the second object built above the first object by building the second object above the first object. In the second modified example, the build system SYS may build the 3D structural object ST including the second object built above the first object and a third object built around the second object by building the second object above the first object and building the third object around the second object.

As described above, the build system SYS builds the 3D structural object ST (for example, the turbine blade BL) including the base member BM, which is an example of the first object, and the roof member RM, which is an example of the second object, built above the base member BM. In the second modified example, the 3D structural object ST (for example, the turbine blade BL) including the base member BM, the roof member RM, and an outer wall member OM, which is one example of the third object, built around the roof member RM may be built. In this 3D structural object ST including the built outer wall member OA, the outer wall member OA and the roof member RM may be an integrated member.

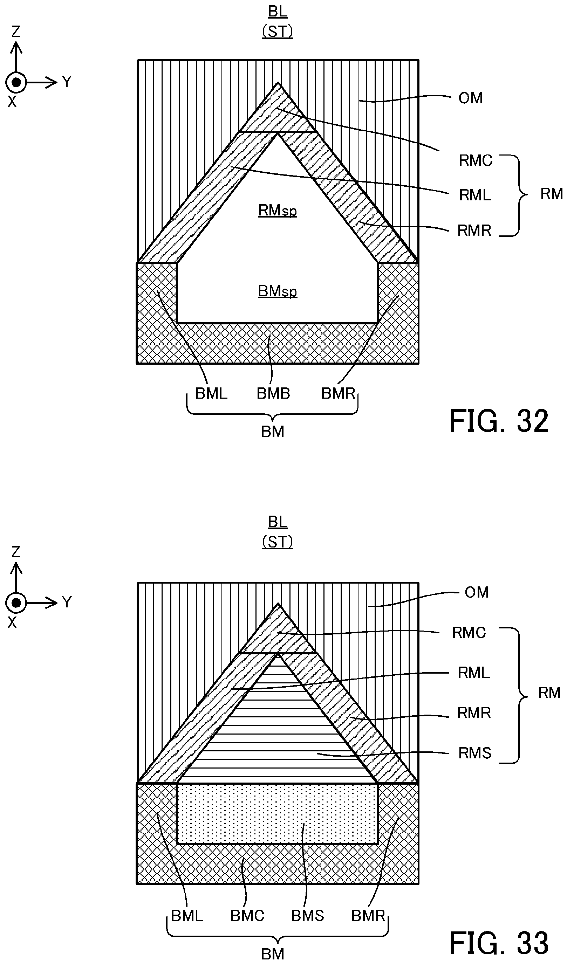

One example of the 3D structural object ST including the outer wall member OM is illustrated in FIG. 32 and FIG. 33. FIG. 32 is a cross-sectional view that illustrates a cross-section of the 3D structural object ST including the outer wall member OM at a position where the support member RMS is not built. FIG. 33 is a cross-sectional view that illustrates a cross-section of the 3D structural object ST including the outer wall member OM at a position where the support member RMS is built.

As illustrated in FIG. 32 and FIG. 33, the outer wall member OM may be built to cover at least a part of the roof member RM. Namely, the outer wall member OM may be built to cover at least a part of the inclination member RML, the inclination member RMR, and the connection member RMC that constitutes the roof member RM and that is exposed to the outside.

The outer wall member OM may be a member for making an outer shape of the 3D structural object ST be a predetermined shape. As one example, in the example illustrated in FIG. 32 and FIG. 33, the outer wall member OM is a member for making the outer shape of an upper part of the 3D structural object ST (namely, a shape of an upper surface of the 3D structural object ST) be a horizontal shape (namely, a horizontal surface).

When the outer wall member OM is built, the build system SYS may perform, in sequence, the building of the partial inclination member RMLp, which is a part of the inclination member RML, the building of the partial inclination member RMRp, which is a part of the inclination member RMR, and a partial outer wall member, which is a part of the outer wall member OM. Namely, the build system SYS may repeat an operation for alternately building the partial inclination member RMI,p, the partial inclination member RMRp, and the partially outer wall member. In this case, it is possible to reduce the possibility of the occurrence of such a technical problem (see FIG. 14) that the build light EL is shielded by a part of the 3D structural object ST that has already been built, as described above.

However, the build system SYS may build the inclination members RML and RMR and the outer wall member OM without performing the building of a part of the inclination member RML, the building of a part of the inclination member RMR, and the building of a part of the outer wall member OM in sequence. For example, the build system SYS may start building the outer wall member OM after building whole of (alternatively, most of) the inclination members RML and RMR.

### (4-3) Third Modified Example

In a third modified example, the build system SYS may build the 3D structural object ST (for example, the turbine blade BL) including the roof member RM in which a through-hole HA is formed.

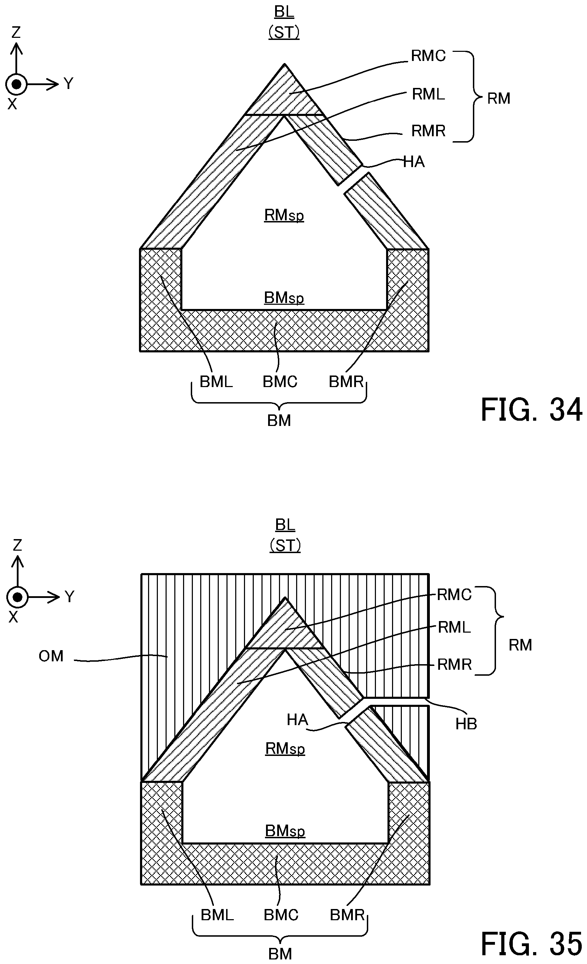

One example of the 3D structural object ST including the roof member RM in which the through-hole HA is formed is illustrated in FIG. 34. As illustrated in FIG. 34, the through-hole HA may be formed in at least one of the inclination members RML and RMR. In an example illustrated in FIG 34, the through-hole HA is formed in the inclination member RMR. The through-hole HA is a hole penetrating the roof member RM (the inclination member RMR in the example illustrated in FIG. 34). The through-hole HA may be a hole connecting a space outside the roof member RM (namely, a space outside the 3D structural object ST) and a space RMsp inside the roof member RM.

In a case where the outer wall member OM described in the second modified example is built around the roof member RM in which the through-hole HA is formed, a through-hole HB may be formed in the outer wall member OM, as illustrated in FIG. 35. The through-hole HB is a hole penetrating the outer wall member OM. The through-hole HB may be connected to the through-hole HA. As a result, the space outside the roof member RM (namely, the space outside the 3D structural object ST) and the space RMsp inside the roof member RM may be connected through the through-holes HA and HB.

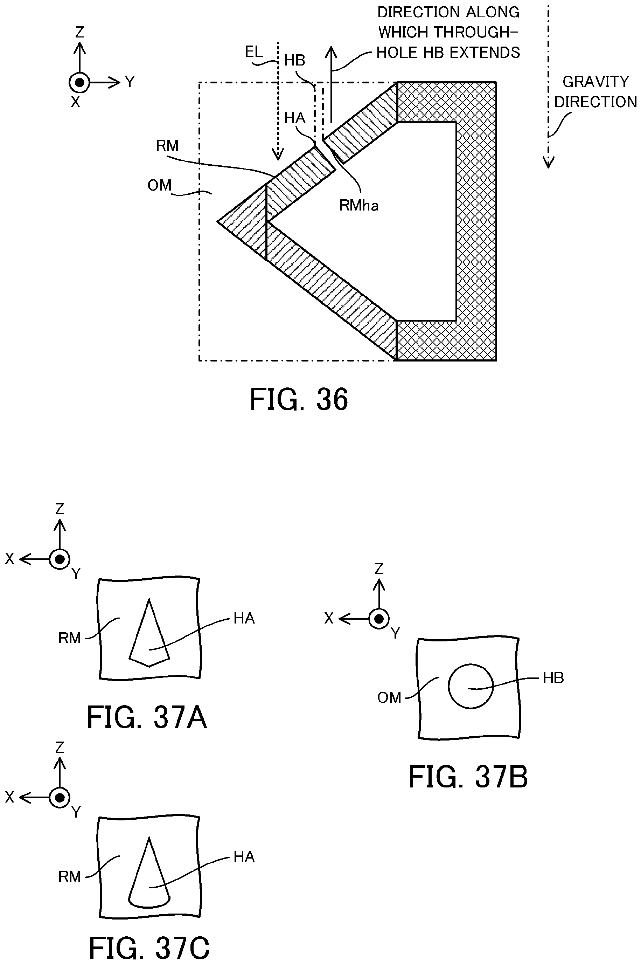

In a case where an outer wall member OM in which the through-hole HB is formed is built, the build system SYS may rotate the stage 31 before building the outer wall member OM so that a direction along which the through-hole HB extends is aligned with the gravity direction, as illustrated in FIG. 36. Then, the build system SYS may build the outer wall member OM in which the through-hole HB is formed (especially, a part of the outer wall member OM surrounding the through-hole HB) in a state where the direction along which the through-hole HB extends is aligned with (for example, parallel to) the gravity direction. In a case where the outer wall member OM is built in such a state that the direction along which the through-hole HB extends is aligned with the gravity direction in this manner, the build system SYS can build the outer wall member OM so that a shape of a cross-section of the through-hole HB (specifically, a cross-section that intersects the direction along which the through-hole HB extends) is a desired shape.

Even in a case where the roof member RM in which the through-hole HA is formed is built, the build system SYS may build the roof member RM in which the through-hole HA is formed (especially, a part of the roof member RM surrounding the through-hole HA) in a state where a direction along which the through-hole HA extends is aligned with (for example, parallel to) the gravity direction. However, as described above, since the roof member RM includes the inclination members RML and RMR, it is desirable that the angle θL between the direction along which the inclination member RML extends and the gravity direction and the angle θR between the direction along which the inclination member RMR extends and the gravity direction be equal to or smaller than the allowable upper limit angle θmax. Thus, depending on the direction along which the inclination members RML and RMR extend, there is a possibility that the build system SYS cannot build the roof member RM in which the through-hole HA is formed in a state where the direction along which the through-hole HA extends is aligned with the gravity direction. In this case, the build system SYS may build the roof member RM in which the through-hole HA is formed in a state where the direction along which the through-hole HA extends is not aligned with (for example, intersects with) the gravity direction. On the other hand, in a case where the roof member RM is built in a state where the direction along which the through-hole HA extends is not aligned with the gravity direction in this manner, there is a possibility that the build system SYS cannot build the roof member RM so that a shape of a cross-section of the through-hole HA (specifically, a cross-section intersecting with the direction along which the through-hole HA extends) is a desired shape. This is because a surface RMha (see FIG. 36) of the roof member RM facing the through-hole HA (namely, forming the through-hole HA) is inclined with respect to the gravity direction, thus, there is a possibility that the molten metal and so on drops from the melt pool MP, which is formed to build the surface RMha, due to gravity, resulting in the shape of the through-hole HA being distorted.

Even in the case where the shape of the cross-section of the through-hole HA formed in the roof member RM is not the desired shape described above, the build system SYS can build the outer wall member OM so that the shape of the through-hole HB formed in the outer wall member OM that covers the roof member RM is the desired shape. Specifically, the build system SYS can build the outer wall member OM in which the through-hole HB (see FIG. 37B) having a cross-sectional shape different from a cross-sectional shape of the through-hole HA (see FIG. 37A). Namely, the build system SYS can build the outer wall member OM so that the shape of the cross-section of the through-hole HA on the surface of the roof member RM (specifically, a boundary surface between the roof member RM and the outer wall member OM) is different from the shape of the cross-section of the through-hole HB on the surface (specifically, the outer surface) of the outer wall member OM. As a result, there is a low possibility that that a person viewing the 3D structural object ST feels uncomfortable with the shape of the through-hole HB appearing on the outer surface of the 3D structural object ST. Therefore, the build system SYS can build the 3D structural object ST having a desired external appearance by building the outer wall member OM so that the shape of the cross-section of the through-hole HB is the desired shape. Note that the shape of the cross-section of the through-hole HA illustrated in FIG. 37A (for example, the shape of the cross-section that is a polygonal shape) is one example, and for example, the through-hole HA having the shape of the cross-section illustrated in FIG. 37C (for example, the shape of the cross-section in which a part of the external shape is a circular arc) may be formed.

### (4-4) Fourth Modified Example

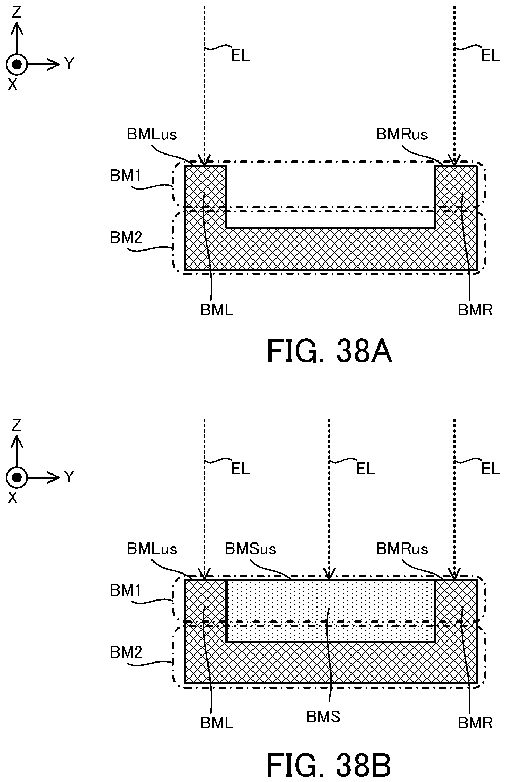

In a fourth modified example, the build system SYS may perform a process for planarizing the surface of the base member BM on which the roof member RM is to be built, after building the base member BM and before building the roof member RM. For example, since the inclination member RML is built on the side wall member BML of the base member BM, the build system SYS may perform the process for planarizing the upper surface BMI,us (see FIG. 38A and FIG. 38B) of the side wall member BML on which the inclination member RML is to be built, before building the inclination member RML. For example, since the inclination member RMR is built on the side wall member BMr of the base member BM, the build system SYS may perform the process for planarizing the upper surface BMRus (see FIG. 38A and FIG. 38B) of the side wall member BML on which the inclination member RMR is to be built, before building the inclination member RMR. For example, since the support member RMS is built on the support member BMS of the base member BM, the build system SYS may perform the for planarizing an upper surface BMSus (see FIG. 38B) of the support member BMS on which the support member RMS is to be built, before building the support member RMS.

The build system SYS may perform the process for planarizing the surface of the base member BM by irradiating the surface of the base member BM with the build light EL. For example, as illustrated in FIG. 38A and FIG. 38B, the build system SYS may perform the process for planarizing the upper surface BMLus of the side wall member BML by irradiating the upper surface BMI,us of the side wall member BML with the build light EL. For example, as illustrated in FIG. 38A and FIG. 38B, the build system SYS may perform the process for planarizing the upper surface BMRus of the side wall member BMR by irradiating the upper surface BMRus of the side wall member BMR with the build light EL. For example, as illustrated in FIG. 38B, the build system SYS may perform the process for planarizing the upper surface BMSus of the support member BMS by irradiating the upper surface BMSus of the support member BMS with the build light EL.

When the surface of the base member BM is irradiated with the build light EL, the metal and so on constituting the surface of the base member BM is at least partially molten and then solidified. As a result, there is a possibility that micro irregularities existing on the surface of the base member BM disappear due to the melting and the solidification of the surface of the base member BM. Alternatively, there is a possibility that a height of the micro irregularities existing on the surface of the base member BM become smaller due to the melting and the solidification of the surface of the base member BM. Thus, the surface of the base member BM that has been irradiated with the build light EL is more planarized than the surface of the base member BM that has not been irradiated with the build light EL.

Alternatively, the build system SYS may perform the process for planarizing the surface of the base member BM by building the base member BM with relatively high building accuracy, in addition to or instead of performing the process for planarizing the surface of the base member BM after building the base member BM. For example, the build system SYS may build the base member BM with the building accuracy that is high enough to achieve a state where the surface of the base member BM no longer has micro irregularities. For example, the build system SYS may build the base member BM with the building accuracy that is high enough to achieve a state where the height of the micro irregularities on the surface of the base member BM does not exceed an upper limit value.

On the other hand, the higher the building accuracy of the base member BM, the more time is required to build the base member BM. Therefore, a throughput related to the building of the 3D structural object ST deteriorates. Thus, the build system SYS may build a first part BM1 of the base member BM, which includes the surface on which the roof member RM is to be built, with a higher building accuracy than that of a second part BM2 of the base member BM, which is different from the first part BM1. In other words, the build system SYS may allow the building accuracy of the second part BM2 of the base member BM that does not include the surface on which the roof member RM is to be built to be lower than the building accuracy of the first part BM1 of the base member BM that includes the surface on which the roof member RM is to be built. As a result, the build system SYS can planarize the surface of the base member BM on which the roof member RM is to be built while suppressing the increase in the time required to build the base member BM. Incidentally, as illustrated in FIG. 38A and FIG. 38B, the first part BM1 of the base member BM that includes the surface on which the roof member RM is to be built is typically a part of the base member BM that is built on the second part BM2 of the base member BM that does not include the surface on which the roof member RM is to be built.

In a case where the process for planarizing the surface of the base member BM is performed in this manner, a deviation between an actual position of the roof member RM built on the base member BM and a design position of the roof member RM is reduced, compared to a case where the process for planarizing the surface of the base member BM is not performed. As a result, the inclination members RML and RMR constituting the roof member RM are more easily connected to each other at upper parts thereof. This is because a misalignment of the inclination members RML and RMR to be connected at the upper parts thereof is relatively small.

### (4-5) Fifth Modified Example

In the above-described description, the two inclination members RML and RMR connected at the upper parts thereof are built on the side wall members BML and BMR, respectively, to build the 3D structural object ST in which the space RMsp below the roof member RM is closed. On the other hand, in a fifth modified example, a below-described method may be used to build the 3D structural object ST in which the space RMsp below the roof member RM is closed.

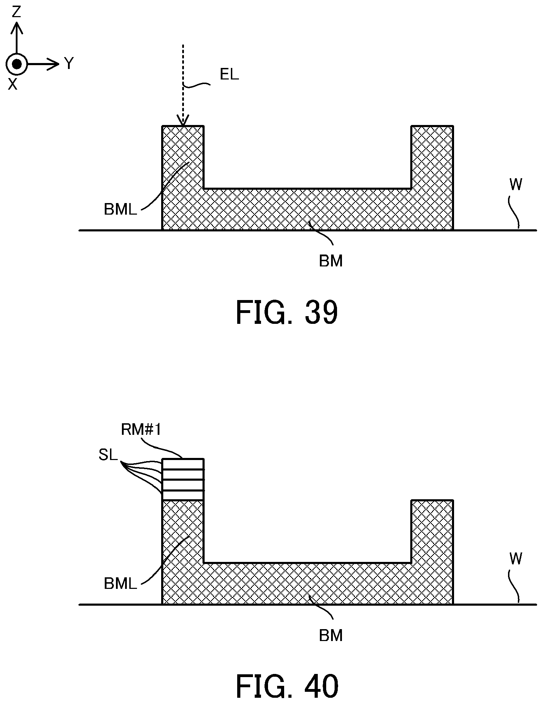

Specifically, firstly, as illustrated in FIG. 39, the build system SYS may perform the build operation for building the build object on the side wall member BML by irradiating the side wall member BML of the base member BM with the build light EL. As a result, the build object is built on the side wall member BML, as illustrated in FIG. 40. This build object constitutes a roof member RM#1 that is a part of the roof member RM in the fifth modified example. In the below-described description, the roof member RM in the fifth modified example is referred to as a "roof member RM‴ to distinguish it from the above-described roof member RM including the inclination members RML and RMR.

Roof member RM#1 may be a member including a single structural layer SL. Alternatively, roof member RM#1 may be a member including a plurality of structural layers SL. In the example illustrated in FIG. 40, the roof member RM#1 includes the plurality of structural layers SL.

When the roof member RM#1 is built, the stage 31 may be located at the reference position. Namely, the position of stage 31 (typically, the rotational angle around the rotational axis) when the roof member RM#1 is built may be the same as the position of stage 31 when the base member BM is built. However, when the roof member RM#1 is built, the stage 31 may be rotated around the rotational axis (for example, the X-axis) from the reference position.

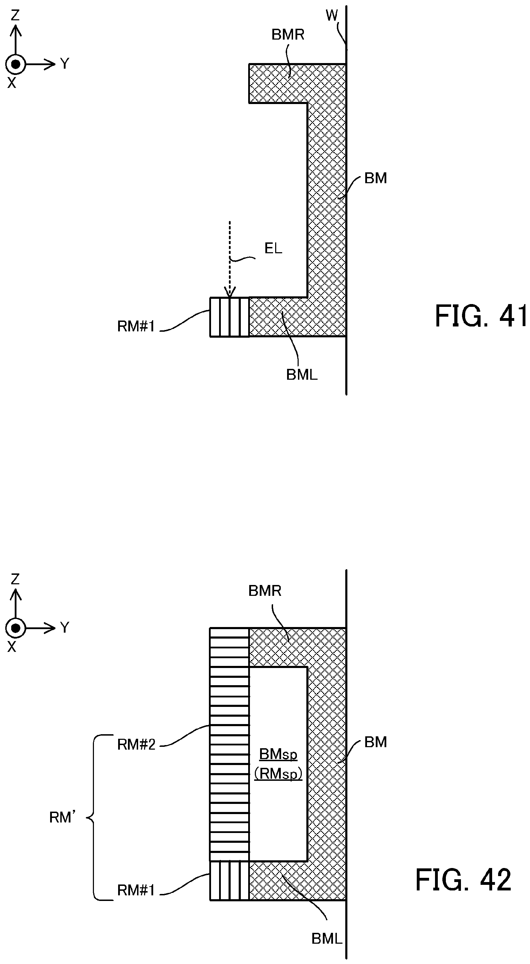

Then, the build system SYS builds a roof member RM#2 that is a rest of the roof member RM' other than the roof member RM#1 that has been already built. Specifically, as illustrated in FIG. 41, the build system SYS rotates the stage 31 around the rotational axis (for example, the rotational axis along the X-axis) from the reference position. Namely, the build system SYS rotate the stage 31 to change the relative positional relationship between the build head 21 and the stage 31 from a first relationship for building the roof member RM#1 to a second relationship for building the roof member RM#2. In this case, for example, the build system SYS may rotate the stage 31 so that a direction directed from the side wall member BML to the side wall member BMR is aligned with the gravity direction. For example, the build system SYS may rotate the stage 31 so that a direction directed from the roof member RM#1 built on the side wall member BML to the side wall member BMR is aligned with the gravity direction. For example, the build system SYS may rotate the stage 31 by 90 degrees around the rotational axis (for example, the rotational axis along the X-axis) from the reference position.

Then, as illustrated in FIG. 41, the build system SYS performs the build operation for building the build object on the roof member RM#1 by irradiating the roof member RM#1 with the build light EL. As a result, as illustrated in FIG. 42, the build object corresponding to the roof member RM#2 is built on the roof member RM#1. In this case, the build system SYS repeats the build operation for building the build object on the roof member RM#1 until the roof member RM#2 is connected to the side wall member BMR. Namely, the build system SYS repeats the build operation for building the build object on the roof member RM#1 until the roof member RM#2 connects the roof member RM#1 and the side wall member BMR. In this case, the build system SYS may change or may not change the position of the stage 31. Namely, the build system SYS may rotate or may not rotate the stage 31 around the rotational axis (for example, the rotational axis along the X-axis).

As can be seen from FIG. 39 and FIG. 41, an angle between the main axis of the build light EL in a case where the roof member RM#2 is built and an axis along the direction directed from the side wall member BML to the side wall member BMR (namely, an axis connecting the side wall member BML and the side wall member BMR, and Z-axis in FIG. 41) may be smaller than an angle between the main axis of the build light EL in a case where the roof member RM#1 is built and the axis along the direction directed from the side wall member BML to the side wall member BMR (Y-axis in FIG. 41). Namely, the build system SYS may rotate that stage 31 so that the angle between the main axis of the build light EL in the case where the roof member RM#2 is built and the axis along the direction directed from the side wall member BML to the side wall member BMR is smaller than the angle between the main axis of the build light EL in the case where the roof member RM#1 is built and the axis along the direction directed from the side wall member BML to the side wall member BMR.

As a result, as illustrated in FIG. 42, the roof member RM#2 connecting the roof member RM#1, which has been built on the side wall member BML, and the side wall member BMR is built. Namely, the roof member RM' connecting the side wall member BML and the side wall member BMR is built. In a case where the roof member RM' is built in this manner, the space RMsp below the roof member RM' is closed by the roof member RM'. Therefore, the build system SYS can build the 3D structural object ST in which the space RMsp below the roof member RM' is closed by the roof member RM' by using the method described in the fifth modified example.

Incidentally, in the example illustrated in FIG. 42, the build system SYS builds the roof member RM#2 that extends along the gravity direction. However, the build system SYS may build the roof member RM#2 at least a part of which extends along a direction inclined with respect to the gravity direction. In this case, the build system SYS the build system SYS may build the roof member RM#2 in a state where an angle between a direction along which the roof member RM#2 extends and the gravity direction is equal to or smaller than the allowable upper limit angle θmax. The build system SYS may build the roof member RM#2 after rotating the stage 31 around the rotational axis so that the angle between a direction along which the roof member RM#2 extends and the gravity direction is equal to or smaller than the allowable upper limit angle θmax.

### (4-6) Sixth Modified Example

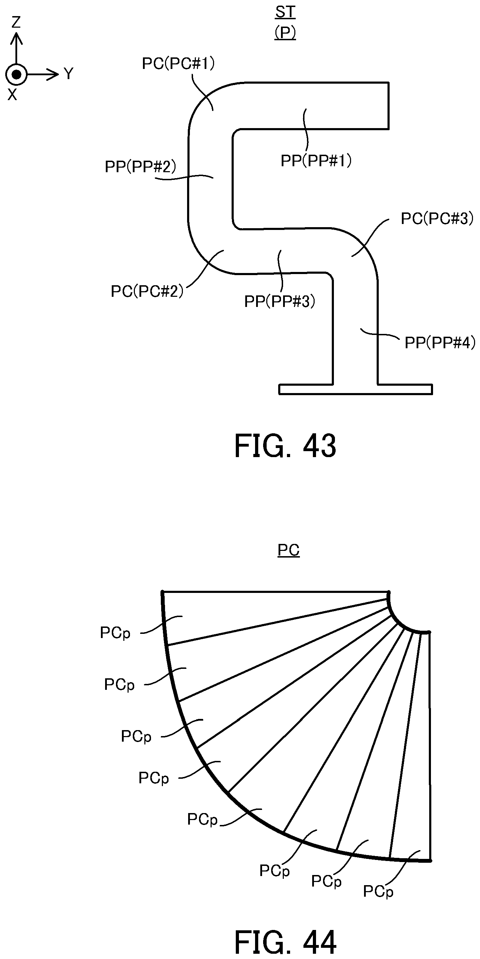

As described above, in the present example embodiment, the build system SYS is configured to rotate the stage 31 around the rotational axis (for example, the rotational axis along the X-axis corresponding to the horizontal direction). In this case, the build system SYS may build a pipe P that includes at least two ducts PP extending in different directions, respectively, as illustrated in FIG. 43 that illustrates one example of the 3D structural object ST. In an example illustrated in FIG. 43, the pipe P includes a duct PP#1 extending straightforwardly along the Y-axis direction, a duct tPP#2 extending straightforwardly along the X-axis direction, a duct PP#3 extending straightforwardly along the Y-axis direction, and a duct PP#4 extending straightforwardly along the XY-axis direction. In this case, the build system SYS may rotate the stage 31 so that the direction along which each duct PP extends is aligned with the gravity direction (alternatively, an angle between the direction along which each duct PP extends and the gravity direction is equal to or smaller than the allowable upper limit angle θmax), and then build each duct PP, for example.

The two ducts PP extending along the different directions may be connected by a bending duct PC for connecting the two ducts PP extending along different directions. In the example illustrated in FIG 43, the duct PP#1 and the duct PP#2 are connected by a duct PC#1, the duct PP#2 and the duct PP#3 are connected by a duct PC#2, and the duct PP#3 and the duct PP#4 are connected by a duct PC#3.

In order to build the bending duct PC, the build system SYS may build a plurality of partial ducts PCp, each of which constitutes the duct PC, in sequence. For example, as illustrated in FIG. 44, the build system SYS may divide the duct PC having a fan shape into the plurality of partial ducts PCp having even smaller fan shapes and build the plurality of partial ducts PCp in sequence.

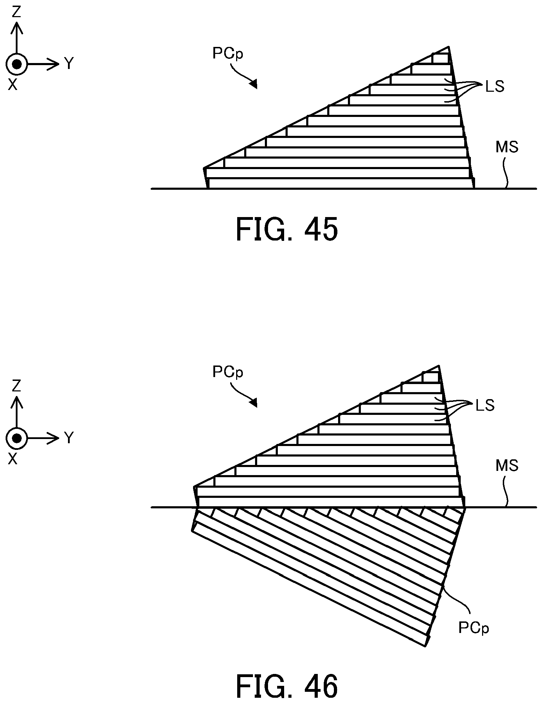

In order to build each partial duct PCp, the build system SYS may perform the above-described build operation for building the plurality of structural layers SL in sequence. For example, as illustrated in FIG. 45, the build system SYS may build the partial duct PCp including the plurality of structural layers SL by building the plurality of structural layers SL on the build surface MS so that the sizes of the plurality of structural layers SL along the XY plane (in the example illustrated in FIG. 45, the size along the Y-axis) gradually decrease. Then, as illustrated in FIG. 46, the build system SYS may set a new build surface MS on the surface of the built partial duct PCp and build a new partial duct PCp on the built partial duct PCp. In this case, the build system SYS may rotate the stage 31 so that the new build surface MS is the horizontal surface.

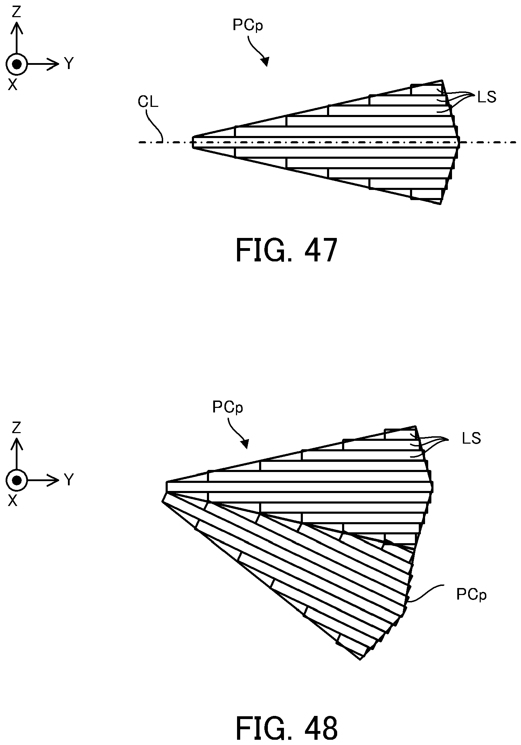

Alternatively, in order to build each partial duct PCp, as illustrated in FIG. 47, the build system SYS may build the partial duct PCp including the plurality of structural layers SL by building the plurality of structural layers SL on the build surface MS so that the sizes of the plurality of structural layers SL along the XY plane (in the example illustrated in FIG. 47, the size along the Y-axis) gradually increase and then gradually decrease, for example. In this case, the stage 31 may be rotated so that a fan-shaped center line CL formed by the partial duct PCp (for example, a line connecting a midpoint of an inner arc and a midpoint of an outer arc) is horizontal. Then, as illustrated in FIG. 48, the build system SYS may set a new build surface MS on the surface of the built partial duct PCp and build a new partial duct PCp on the built partial duct PCp. In this case, the build system SYS can build the duct PC more accurately, compared to a case where the duct PC is built by the method illustrated in FIG. 46 to FIG. 47.

### (4-7) Other Modified Example

In the above-described description, the build system SYS processes the workpiece W by irradiating the workpiece W with the build light EL. However, the build system SYS may process the workpiece W by irradiating the workpiece W with any energy beam. In this case, the build system SYS may include a beam irradiation apparatus that is configured to emit any energy beam in addition to or instead of the light source 5 and the irradiation optical system 211. At least one of a charged particle beam, an electromagnetic wave and the like is one example of any energy beam. At least one of an electron beam, an ion beam and the like is one example of the charged particle beam.

### (5) Supplementary Note

With respect to the example embodiments described above, the following Supplementary Notes will be further disclosed.

### [Supplementary Note 1]

A build system including:
a build apparatus that includes: an energy beam irradiation unit that emits an energy beam; and a material supply unit that supplies a build material to a part that is irradiated with the energy beam; and
a control apparatus that controls the build apparatus to build a build object,
wherein
a second object is built above a first object,
the second object includes: a first inclination part that is connected to the first object; a second inclination part that is connected to the first object; and a connection part that connects an end of the first inclination part and an end of the second inclination part,
the first inclination part and the second inclination part are built by alternately performing a building of a part of the first inclination part and a building of a part of the second inclination part,
a space below the first inclination part and the second inclination part faces the first object,
an upper part of the space is closed by the connection part.

### [Supplementary Note 2]

The build system according to the Supplementary Note 1, wherein
the connection part is built by forming a melt part at the end of the first inclination part and the end of the second inclination part and supplying the build material to the melt part.

### [Supplementary Note 3]

The build system according to the Supplementary Note 1 or 2, wherein
a third object is built around the second object,
the second object and the third object are built by alternately performing a building of a part of the first inclination part, a building of a part of the second inclination part, and a building of a part of the third object.

### [Supplementary Note 4]

The build system according to the Supplementary Note 3, wherein
the third object includes an outer wall member that makes an outer shape of a structural object including the second object be a predetermined shape by covering at least a part of a surface of the second object.

### [Supplementary Note 5]

The build system according to the Supplementary Note 4, wherein
an outer shape of an upper part of the structural object is a horizontal shape.

### [Supplementary Note 6]

The build system according to any one of the Supplementary Notes 1 to 5, wherein
the second object include: a first support part that is connected to the first inclination part; and a second support part that is connected to the second inclination part,
the second object is built by alternately performing a building of a part of the first inclination part and a part of the first support part, a building of a part of the second inclination part and a second support part, and a building of a part of a third support part between the first support part and the second support.

### [Supplementary Note 7]

The build system according to any one of the Supplementary Notes 1 to 6, wherein
the first inclination part extends in a first direction,
the second inclination part extends in a second direction that intersects with the first direction,
the first direction and the second direction are directions that intersect with a gravity direction.

### [Supplementary Note 8]

The build system according to any one of the Supplementary Notes 1 to 7, wherein
the first inclination part extends in a first direction,
the second inclination part extends in a second direction that intersects with the first direction,
the first direction and the second direction are directions that intersect with a main axis of the energy beam.

### [Supplementary Note 9]

The build system according to any one of the Supplementary Notes 1 to 8 further including a support apparatus that supports a structural object including the second object built by the build apparatus, wherein
the first inclination part extends in a first direction,
the second inclination part extends in a second direction that intersects with the first direction,
the first direction and the second direction are directions that intersect with an upper surface of the support apparatus.

### [Supplementary Note 10]

The build system according to any one of the Supplementary Notes 1 to 9, wherein
a structural object including the second object is a turbine blade.

### [Supplementary Note 11]

A build method for building a build object by a build apparatus that includes: an energy beam irradiation unit that emits an energy beam; and a material supply unit that supplies a build material to a part that is irradiated with the energy beam,
wherein
the build method includes:
alternately performing a building of a part of a first inclination part that is connected to a first object and a building of a part of a second inclination part that is connected to the first object, to build a second object above the first object; and
building a connection part that connects an end of the first inclination part and an end of the second inclination part,
a space below the first inclination part and the second inclination part faces the first object,
an upper part of the space is closed by the connection part.

### [Supplementary Note 12]

A turbine blade that is built by a build object by a build apparatus that includes: an energy beam irradiation unit that emits an energy beam; and a material supply unit that supplies a build material to a part that is irradiated with the energy beam,
wherein
the turbine blade includes:
a first inclination part that is connected to a first object;
a second inclination part that is connected to the first object;
a connection part that connects an end of the first inclination part and an end of the second inclination part; and
an outer wall member that makes an outer shape be a predetermined shape by covering a part of the first inclination part, the second inclination part and the connection part,
a space below the first inclination part and the second inclination part faces the first object,
an upper part of the space is closed by the connection part.

### [Supplementary Note 13]

A build system including:
a build apparatus that includes: an energy beam irradiation unit that emits an energy beam; and a material supply unit that supplies a build material to a part that is irradiated with the energy beam; and
a control apparatus that controls the build apparatus to build a build object,
wherein
a second object is built above a first object,
the second object includes: a first inclination part that is connected to the first object; and a second inclination part that is connected to the first object,
the control apparatus controls the build apparatus to build the first inclination part and the second inclination part by alternately performing a building of a part of the first inclination part and a building of a part of the second inclination part,
a space below the first inclination part and the second inclination part faces the first object,
an upper part of the space is closed.

### [Supplementary Note 14]

A build method for building a build object by a build apparatus that includes: an energy beam irradiation unit that emits an energy beam; and a material supply unit that supplies a build material to a part that is irradiated with the energy beam,
wherein
the build method includes building a second object above the first object,
building the second object includes alternately performing a building of a part of a first inclination part that is connected to the first object and a building of a part of a second inclination part that is connected to the first object,
a second space below the first inclination part and the second inclination part faces the first obj ect,
an upper part of the second space is closed.

### [Supplementary Note 15]

A turbine blade that is built by a build object by a build apparatus that includes: an energy beam irradiation unit that emits an energy beam; and a material supply unit that supplies a build material to a part that is irradiated with the energy beam,
wherein
the turbine blade includes:
a first inclination part that is connected to a first object;
a second inclination part that is connected to the first object; and
an outer wall member that makes an outer shape be a predetermined shape by covering a part of the first inclination part and the second inclination part,
a space below the first inclination part and the second inclination part faces the first object,
an upper part of the space is closed.

### [Supplementary Note 16]

A build method for building a build object by a build apparatus that includes: an energy beam irradiation unit that emits an energy beam; and a material supply unit that supplies a build material to a part that is irradiated with the energy beam,
wherein
the build method includes:
alternately performing a building of a part of a first inclination part that is connected to a first object and a building of a part of a second inclination part that is connected to the first object, to build a second object above the first object including a first space; and
building a connection part that connects an end of the first inclination part and an end of the second inclination part,
a second space below the first inclination part and the second inclination part is connected to the first space,
an upper part of the second space is closed by the connection part.

### [Supplementary Note 17]

A turbine blade that is built by a build object by a build apparatus that includes: an energy beam irradiation unit that emits an energy beam; and a material supply unit that supplies a build material to a part that is irradiated with the energy beam,
wherein
the turbine blade includes:
a first inclination part that is connected to a first object including a first space;
a second inclination part that is connected to the first object;
a connection part that connects an end of the first inclination part and an end of the second inclination part; and
an outer wall member that makes an outer shape be a predetermined shape by covering a part of the first inclination part, the second inclination part and the connection part,
a second space below the first inclination part and the second inclination part is connected to the first space,
an upper part of the second space is closed by the connection part.

### [Supplementary Note 18]

A build system including:
a build apparatus that includes: an energy beam irradiation unit that emits an energy beam; and a material supply unit that supplies a build material to a part that is irradiated with the energy beam; and
a control apparatus that controls the build apparatus to build a build object,
wherein
a second object is built above a first object including a first space,
the second object includes: a first inclination part that is connected to the first object; and a second inclination part that is connected to the first object,
the control apparatus controls the build apparatus to build the first inclination part and the second inclination part by alternately performing a building of a part of the first inclination part and a building of a part of the second inclination part,
a second space below the first inclination part and the second inclination part is connected to the first space,
an upper part of the second space is closed.

### [Supplementary Note 19]

A build method for building a build object by a build apparatus that includes: an energy beam irradiation unit that emits an energy beam; and a material supply unit that supplies a build material to a part that is irradiated with the energy beam,
wherein
the build method includes building a second object above the first object including a first space,
building the second object includes alternately performing a building of a part of a first inclination part that is connected to the first object and a building of a part of a second inclination part that is connected to the first object,
a second space below the first inclination part and the second inclination part is connected to the first space,
an upper part of the second space is closed.

### [Supplementary Note 20]

A turbine blade that is built by a build object by a build apparatus that includes: an energy beam irradiation unit that emits an energy beam; and a material supply unit that supplies a build material to a part that is irradiated with the energy beam,
wherein
the turbine blade includes:
a first inclination part that is connected to a first object including a first space;
a second inclination part that is connected to the first object; and
an outer wall member that makes an outer shape be a predetermined shape by covering a part of the first inclination part and the second inclination part,
a second space below the first inclination part and the second inclination part is connected to the first space,
an upper part of the second space is closed.

At least a part of the features of each example embodiment described above may be appropriately combined with at least another part of the features of each example embodiment described above. A part of the features of each example embodiment described above may not be used. Moreover, the disclosures of all publications and United States patents that are cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification, and a build system, which involves such changes, is also intended to be within the technical scope of the present invention.

### Description of Reference Codes

- 2: build apparatus
- 21: build head
- 22: head driving system
- 3: stage apparatus
- 31, 31θX, 31θZ: stage
- 32: stage driving system
- 7: control apparatus
- W: workpiece
- EL: build apparatus
- ST: 3D structural object
- BL: turbine blade
- BM: base member
- BML, BMR: side wall member
- BMS: support member
- RM: roof member
- RML, RMR: inclination member
- RMS: support member
- RMC: connection member

## Claims

1. A build system comprising:
a build apparatus that includes: an energy beam irradiation unit that emits an energy beam; and a material supply unit that supplies a build material to a part that is irradiated with the energy beam; and
a control apparatus that controls the build apparatus to build a build object,
wherein
a second object is built above a first object including a first space,
the second object includes: a first inclination part that is connected to the first object; a second inclination part that is connected to the first object; and a connection part that connects an end of the first inclination part and an end of the second inclination part,
the first inclination part and the second inclination part are built by alternately performing a building of a part of the first inclination part and a building of a part of the second inclination part,
a second space below the first inclination part and the second inclination part is connected to the first space,
an upper part of the second space is closed by the connection part.

2. The build system according to claim 1, wherein
the connection part is built by forming a melt part at the end of the first inclination part and the end of the second inclination part and supplying the build material to the melt part.

3. The build system according to claim 1 or 2, wherein
a third object is built around the second object,
the second object and the third object are built by alternately performing a building of a part of the first inclination part, a building of a part of the second inclination part, and a building of a part of the third object.

4. The build system according to claim 3, wherein
the third object includes an outer wall member that makes an outer shape of a structural object including the second object be a predetermined shape by covering at least a part of a surface of the second object.

5. The build system according to claim 4, wherein
an outer shape of an upper part of the structural object is a horizontal shape.

6. The build system according to any one of claims 1 to 5, wherein
the second object include: a first support part that is connected to the first inclination part; and a second support part that is connected to the second inclination part,
the second object is built by alternately performing a building of a part of the first inclination part and a part of the first support part, a building of a part of the second inclination part and a second support part, and a building of a part of a third support part between the first support part and the second support.

7. The build system according to any one of claims 1 to 6, wherein
the first inclination part extends in a first direction,
the second inclination part extends in a second direction that intersects with the first direction,
the first direction and the second direction are directions that intersect with a gravity direction.

8. The build system according to any one of claims 1 to 7, wherein
the first inclination part extends in a first direction,
the second inclination part extends in a second direction that intersects with the first direction,
the first direction and the second direction are directions that intersect with a main axis of the energy beam.

9. The build system according to any one of claims 1 to 8 further comprising a support apparatus that supports a structural object including the second object built by the build apparatus, wherein
the first inclination part extends in a first direction,
the second inclination part extends in a second direction that intersects with the first direction,
the first direction and the second direction are directions that intersect with an upper surface of the support apparatus.

10. The build system according to any one of claims 1 to 9, wherein
a structural object including the second object is a turbine blade.

11. A build system comprising:
a build apparatus that includes: an energy beam irradiation unit that emits an energy beam; and a material supply unit that supplies a build material to a part that is irradiated with the energy beam; and
a control apparatus that controls the build apparatus to build a build object,
wherein
a second object is built above a first object,
the second object includes a first inclination part and a second inclination part,
a space is formed below the first inclination part and the second inclination part, and an upper part of the space is closed.

12. The build system according to claim 11 further comprising:
a support apparatus that supports a structural object including the build object build by the build apparatus; and
a position change apparatus that changes a relative positional relationship between the build apparatus and the support apparatus,
wherein
the first inclination part is built after the position change apparatus changes the positional relationship so that the positional relationship is a first relationship, and the second inclination part is built after the position change apparatus changes the positional relationship so that the positional relationship is a second relationship that is different from the first relationship.

13. The build system according to claim 12, wherein
before the second object is built, the first object is built in a situation where the positional relationship is a third relationship that is different from the first relationship and the second relationship.

14. The build system according to any one of claims 11 to 13, wherein
the second object include: a first support part that is connected to the first inclination part; and a second support part that is connected to the second inclination part,
a part of the first inclination part and a part of the first support part are built after the position change apparatus changes the positional relationship so that the positional relationship is a first relationship,
a part of the second inclination part and a part of the second support part are built after the position change apparatus changes the positional relationship so that the positional relationship is a second relationship that is different from the first relationship,
a third support part is built between a part of the first support part and a part of the second support part after the position change apparatus changes the positional relationship so that the positional relationship is a third relationship that is different from the first relationship and the second relationship.

15. The build system according to any one of claims 11 to 14, wherein
the second object includes a connection part that connects an end of the first inclination part and an end of the second inclination part,
the connection part is built by forming a melt part at the end of the first inclination part and the end of the second inclination part and supplying the build material to the melt part.

16. The build system according to any one of claims 11 to 15, wherein
a third object is built around the second object,
the second object and the third object are built by alternately performing a building of a part of the first inclination part, a building of a part of the second inclination part, and a building of a part of the third object.

17. The build system according to claim 16, wherein
the third object includes an outer wall member that makes an outer shape of a structural object including the second object be a predetermined shape by covering at least a part of a surface of the second object.

18. The build system according to claim 17, wherein
an outer shape of an upper part of the structural object is a horizontal shape.

19. The build system according to any one of claims 11 to 18, wherein
the second object include: a first support part that is connected to the first inclination part; and a second support part that is connected to the second inclination part,
the second object is built by alternately performing a building of a part of the first inclination part and a part of the first support part, a building of a part of the second inclination part and a second support part, and a building of a part of a third support part between the first support part and the second support.

20. The build system according to any one of claims 11 to 19, wherein
the first inclination part extends in a first direction,
the second inclination part extends in a second direction that intersects with the first direction,
the first direction and the second direction are directions that intersect with a gravity direction.

21. The build system according to any one of claims 11 to 20, wherein
the first inclination part extends in a first direction,
the second inclination part extends in a second direction that intersects with the first direction,
the first direction and the second direction are directions that intersect with a main axis of the energy beam.

22. The build system according to any one of claims 11 to 21 further comprising a support apparatus that supports a structural object including the second object built by the build apparatus, wherein
the first inclination part extends in a first direction,
the second inclination part extends in a second direction that intersects with the first direction,
the first direction and the second direction are directions that intersect with an upper surface of the support apparatus.

23. A build system comprising:
an object placing apparatus on which a first object is placed;
a build apparatus that includes: an energy beam irradiation unit that emits an energy beam; and a material supply unit that supplies a build material to a part that is irradiated with the energy beam, and that performs a building on the first object;
a position change apparatus that changes a relative positional relationship between the build apparatus and the object placing apparatus; and
a control apparatus that controls the build apparatus and the object placing apparatus,
wherein
the position change apparatus includes a driving apparatus that moves the object placing apparatus around a rotational axis,
a first build operation that is performed by using the build apparatus in a first state in which the object placing apparatus is moved from a reference position toward a first direction around the rotational axis and a second build operation that is performed by using the build apparatus in a second state in which the object placing apparatus is moved from the reference position toward a second direction, which is opposite to the first direction, around the rotational axis are alternately performed to build, on the first object, a second object that includes a first inclination part built by the first build operation and a second inclination part built by the second build operation.

24. The build system according to claim 23, wherein
the first build operation includes changing, by using the position change apparatus, the positional relationship in a direction parallel to the rotational axis between the object placing apparatus and the build apparatus in the first state,
the second build operation includes changing, by using the position change apparatus, the positional relationship in a direction parallel to the rotational axis between the object placing apparatus and the build apparatus in the second state.

25. The build system according to claim 23 or 24, wherein
the first build operation includes simultaneously changing, by using the position change apparatus, the positional relationship in a direction parallel to the rotational axis and the positional relationship in a direction perpendicular to the rotational axis between the object placing apparatus and the build apparatus in the first state,
the second build operation includes simultaneously changing, by using the position change apparatus, the positional relationship in a direction parallel to the rotational axis and the positional relationship in a direction perpendicular to the rotational axis between the object placing apparatus and the build apparatus in the second state.

26. The build system according to any one of claims 23 to 25, wherein
a connection part that connects an end part of the first inclination part and an end part of the second inclination part is built as a part of the second object by returning the object placing apparatus to the reference position after the first and second build operations are finished, forming a melt part including a part of the end part of the first inclination part and a part of the end part of the second inclination angle that is adjacent to a part of the end part of the first inclination part, and supplying the build material to the melt part.

27. The build system according to any one of claims 23 to 26, wherein
the first object has a longitudinal direction in a direction parallel to the rotational axis.

28. A build system comprising:
an object placing apparatus on which a first object is placed;
a build apparatus that includes: an energy beam irradiation unit that emits an energy beam; and a material supply unit that supplies a build material to a part that is irradiated with the energy beam, and that performs a building on the first object;
a position change apparatus that changes a relative positional relationship between the build apparatus and the object placing apparatus; and
a control apparatus that controls the build apparatus and the object placing apparatus,
wherein
a second object that connects a first area of the first object and a second area of the first object is built,
in order to build the second object:
a first build object that is a part of the second object is built on the first area by irradiating the first area with the energy beam after the position change apparatus changes the positional relationship so that the positional relationship is a first relationship; and
a second build object that is a part of the second object and that connect the first build object and the second area is built on the first build object by irradiating the first build object with the energy beam after the position change apparatus changes the positional relationship so that the positional relationship is a second relationship that is different from the first relationship.

29. The build system according to claim 28, wherein
the first positional relationship is a positional relationship in which an angle between an axis connecting the first area and the second area and a main axis of the energy beam is a first angle,
the second positional relationship is a positional relationship in which the angle is a second angle smaller that is than the first angle.

30. The build system according to any one of claims 23 to 29, wherein
the position change apparatus changes the positional relationship by changing a relative attitude of the object placing apparatus relative to the build apparatus.

31. The build system according to any one of claims 1 to 30, wherein
the build apparatus irradiates the first object with the energy beam while moving an irradiation position of the energy beam relative to the first object along a predetermined direction,
a moving direction of the irradiation position in a first period for building a part of the second object is different from a moving direction of the irradiation position in a second period for building another part of the second object.

32. The build system according to claim 31, wherein
the moving direction of the irradiation position in the first period is opposite to the moving direction of the irradiation position in the second period.

33. The build system according to claim 31 or 32, wherein
the first period include a period during which a first build obj ect that is a part of the second object is built,
the second period include a period during which a second build object that is another part of the second object and that is different from the first build object is built.

34. The build system according to any one of claims 1 to 33, wherein
the second object in which a through-hole is formed is built.

35. The build system according to claim 34, wherein
the through-hole is a first through-hole,
a third object, which covers at least a part of a surface of the second object and in which a second through-hole connected to the first through-hole is formed, is built around the second obj ect,
a shape of the first through-hole at a border between the second object and the third object is different from a shape of the second through-hole on a surface of the third object.

36. The build system according to claim 34 or 35 further comprising:
an object placing apparatus on which the first object is placed; and
a position change apparatus that changes a relative positional relationship between the build apparatus and the object placing apparatus,
a part of the third object is built after the position change apparatus changes the positional relationship so that the positional relationship is a predetermined relationship in which an extending direction of the second through-hole is same as a gravity direction.

37. The build system according to any one of claims 1 to 36, wherein
a part of the second object is built on a first area by irradiating the first area with the energy beam after at least a part of the first area is molten by irradiating the first area of the first object with the energy beam and the at least a part of the first area molten is solidified,
another part of the second object is built on a second area by irradiating the second area with the energy beam after at least a part of the second area is molten by irradiating the second area of the first object with the energy beam and the at least a part of the second area molten is solidified.

38. The build system according to any one of claims 1 to 37, wherein
the first object is built and then the second object is built on the first object,
a part of the first object is built with a first build accuracy and then remaining part of the first object, which includes a surface on which the second object is built, is built with a second build accuracy that is higher than the first build accuracy.

39. The build system according to any one of claims 1 to 38, wherein
a structural object including the second object is a turbine blade.
